# EUROPEAN PATENT APPLICATION

(11) **EP 4 746 348 A1**
(43) Date of publication of application: **20.05.2026**
(21) Application number: 24848162.4
(22) Date of filing: 26.07.2024
(51) Int. Cl.: H04L 9/40

(54) **SERVICE API CALLING METHOD AND APPARATUS**

(30) Priority: 01.08.2023 CN 202310966577
(71) Applicant: Huawei Technologies Co., Ltd., Shenzhen, Guangdong 518129 (CN)
(72) Inventor: HU, Li, Shenzhen, Guangdong 518129 (CN); AMOGH, Niranth, Shenzhen, Guangdong 518129 (CN); WU, Rong, Shenzhen, Guangdong 518129 (CN)
(74) Representative: Epping - Hermann - Fischer
(86) International application number: PCT/CN2024/107764
(87) International publication number: WO 2025/026205

(57) **Abstract**

This application provides a method for invoking a service API and an apparatus, applied to a common application programming interface API framework, to invoke service APIs of different grant types. The method includes: An API information function entity receives an identifier of the service API and a grant type from an API publishing function entity, and the API information function entity sends the identifier of the service API and the grant type to an API invoker. In this way, when the API invoker invokes the service API, the method for invoking the service API may be determined based on the grant type corresponding to the service API, to improve security performance.

## Description

This application claims priority to Chinese Patent Application No. 202310966577.7, filed with the China National Intellectual Property Administration on August 1, 2023, and entitled "METHOD FOR INVOKING SERVICE API AND APPARATUS", which is incorporated herein by reference in its entirety.

### TECHNICAL FIELD

This application relates to the field of communication technologies, and in particular, to a method for invoking a service API and an apparatus.

### BACKGROUND

The 3rd generation partnership project (3rd Generation Partnership Project, 3GPP) defines a variety of application programming interface (application programming interface, API)-related specifications. To avoid repetition and inconsistency between different API-related specifications, the 3GPP defines a common API framework (common API framework, CAPIF). The CAPIF includes common features applicable to APIs. In addition, a 3GPP network may provide services externally through the CAPIF.

In the CAPIF, an API invoker may request 3GPP information from the 3GPP network. For example, the API invoker may request location information of a user from the 3GPP network, and the location information of the user is user privacy information. If the API invoker obtains the 3GPP information without user authorization, the user privacy information may be exposed.

Therefore, how to implement service API invocation in different authorization methods in the existing CAPIF architecture to improve security performance is a technical problem to be resolved urgently.

### SUMMARY

Embodiments of this application provide a method for invoking a service API and an apparatus, to invoke service APIs of different grant types in a CAPIF, thereby improving security performance.

To achieve the foregoing objective, the following technical solutions are used in this application. According to a first aspect, a method for invoking a service API is provided, and is applied to a common API framework. An API information function entity provides, for an API invoker, an interface for invoking the service API published by an API publishing function entity, and the method includes: receiving an identifier of the service API and first information from the API publishing function entity, where the first information includes a grant type, and the grant type indicates an authorization method for the service API; and sending method information associated with the grant type to the API invoker, where the method information is for determining the method for invoking the service API.

It may be understood that the API invoker in this application may be an application function (application function, AF) entity, a client, or a third-party application, or may be a terminal device (for example, a mobile phone) or a chip (system) that may be disposed in the terminal device. The API information function entity may be a CAPIF core function entity or a component (for example, a chip or a circuit) of the CAPIF core function entity. This is not limited herein.

Based on the method provided in the first aspect, the API information function entity obtains the identifier of the service API and the corresponding grant type from the API publishing function entity. Subsequently, the API information function entity sends the method information associated with the grant type to the API invoker. In this way, when invoking the service API, the API invoker may determine, based on the method information, the method for invoking the service API. For example, for a service API that can access user privacy, the method information is an authorization code grant or a PKCE, so that user's participation in authorization is involved when the API invoker invokes the service API, thereby improving security performance.

In a possible implementation, a same service API may have a plurality of grant types. However, when invoking the service API, the API invoker may use only one of the grant types. The API information function entity may determine the grant type, that is, the method information, from the plurality of grant types. Before the sending the method information associated with the grant type to the API invoker, the method further includes: obtaining the method information based on the grant type.

In a possible implementation, before the sending the method information associated with the grant type to the API invoker, the method further includes: receiving capability information from the API invoker, where the capability information indicates a grant type supported by the API invoker. The obtaining the method information based on the grant type includes: selecting the method information based on the capability information and the grant type. The API invoker and a network can negotiate different grant types of the service API by obtaining the capability information of the API invoker. The method information is determined based on the grant type supported by the API invoker and one or more grant types of the service API, to ensure that the determined method information is the grant type supported by the API invoker. In this way, an invocation failure caused by invoking the service API by the API invoker by using a grant type not supported by the API invoker is avoided.

In a possible implementation, the first information further includes an identifier of an API exposing function AEF, and the receiving capability information from the API invoker includes: receiving the capability information and the identifier of the AEF from the API invoker. The method further includes: determining the grant type based on the identifier of the AEF, where the grant type indicates a grant type corresponding to the AEF. It should be noted that the grant type herein is at an AEF granularity. The API information function entity obtains the identifier of the AEF and the corresponding grant type from the API publishing function entity. Subsequently, when the API invoker requests a security method, the capability information of the API invoker and the identifier of the AEF are obtained, so that the API information function entity can determine, based on the identifier of the AEF, the grant type corresponding to the AEF, and further determine the method information based on the grant type supported by the API invoker and the grant type corresponding to the AEF, to ensure that the determined method information is the grant type supported by the API invoker. The API information function entity sends the identifier of the AEF and the corresponding grant type to the API invoker. In this way, when invoking the service API via the AEF, the API invoker may determine, based on the grant type for the AEF, the method for invoking the service API.

In a possible implementation, the API information function entity stores the identifier of the service API and the first information. A correspondence between the service API and the grant type is stored. Subsequently, when the API invoker requests to discover the service API, the API information function entity may determine the grant type for the service API based on the stored correspondence and the identifier of the service API.

In a possible implementation, the first information further includes the identifier of the AEF. A correspondence between the identifier of the AEF and the grant type is stored. Subsequently, when the API invoker reports the identifier of the AEF by using a security method request message, the API information function entity may determine the grant type for the service API based on the stored correspondence and the identifier of the AEF.

In a possible implementation, after the receiving the identifier of the service API and the first information from the application programming interface API publishing function entity, the method further includes: receiving the identifier of the service API and second information from the API publishing function entity, where the second information is different from the first information; and updating the first information to the second information. It may be understood that when separately receiving first information and second information for an identifier of a same service API, the API information function entity updates the first information of the service API to the second information, where the first information is old service API information, and the second information is new service API information. This ensures that information about the published service API is latest, and avoids an invocation failure caused by invoking the service API by the API invoker by using the old service API information.

In a possible implementation, a cause value is received from the API publishing function entity, where the cause value indicates to update information corresponding to the service API.

In a possible implementation, the second information is sent to the API invoker. In a possible implementation, the API invoker subscribes to a service API information change event. The second information is sent to the API invoker when the information about the service API changes. In this way, the API invoker can obtain latest service API information in a timely manner.

In a possible implementation, the first information further includes one or more of an identifier of an authorization function AuF, a scope, and a PKCE security method, where the identifier of the AuF indicates an address of the AuF, the scope indicates a scope in which the service API is allowed to be authorized, and the PKCE security method indicates a method for generating a challenge value, where the challenge value is for verifying an identity of the API invoker.

In a possible implementation, one or more of the identifier of the AuF, the scope, and a determined PKCE security method are sent to the API invoker, where the determined PKCE security method is determined based on the PKCE security method.

In a possible implementation, the grant type for the service API includes one or more of a client credential grant, an authorization code grant, and a proof key for code exchange PKCE. Both the authorization code grant and the PKCE are applicable to a scenario in which a user participates in authorization. Because the user needs to participate in an authorization process, a risk of directly obtaining an access token by the API invoker can be avoided. In addition, an authorization code can be used only once, and a validity period is short. This effectively prevents a risk of authorization code leakage. The client credential grant is applicable to a scenario in which the API invoker needs to access a resource of the API invoker. In addition, because a user does not need to participate in an authorization process, user experience can be improved.

In a possible implementation, the grant type further includes an implicit grant and a resource owner password credentials grant. The implicit grant is applicable to an application program that does not need to be supported by a backend server, and the resource owner password credentials grant is applicable to a backend application program. That is, the grant type for the service API includes one or more of the client credential grant, the authorization code grant, the proof key for code exchange PKCE, the implicit grant, and the resource owner password credentials grant.

In a possible implementation, the sending the method information associated with the grant type to the API invoker includes: receiving a discovery service request message from the API invoker, where the discovery service request message is for requesting to discover the service API; and sending the method information associated with the grant type to the API invoker in response to the discovery service request message.

In a possible implementation, the sending the method information associated with the grant type to the API invoker includes: receiving a security method request message from the API invoker, where the security method request message is for negotiating a security method; and sending the method information associated with the grant type to the API invoker in response to the security method request message.

According to a second aspect, a method for invoking a service API is provided, and is applied to a common API framework. An API invoker invokes, via an API information function entity, the service API published by an API publishing function entity, and the method includes: receiving method information from the API information function entity, where the method information includes one or more of a client credential grant, an authorization code grant, and a proof key for code exchange PKCE; and requesting, from the API information function entity based on the method information, an access token for invoking the service API, where the method information is for determining the method for invoking the service API.

Based on the method provided in the second aspect, the API invoker receives the method information of the service API from the API information function entity. In this way, when invoking the service API, the API invoker may determine, based on the method information, the method for invoking the service API. For example, for a service API that can access user privacy, the invocation method is an authorization code grant method or a PKCE method, so that user's participation in authorization is involved when the API invoker invokes the service API, thereby improving security performance.

In a possible implementation, the method information includes two or three of the client credential grant, the authorization code grant, and the PKCE, and the method further includes: determining, by the API invoker based on the method information, the method for invoking the service API. Method information of a same service API may include a plurality of invocation methods, but the API invoker may use only one of the invocation methods when invoking the service API. In this case, the API invoker may determine one invocation method from the method information.

In a possible implementation, the determining, based on the method information, the method for invoking the service API includes: selecting one invocation method from the method information according to a local policy, where the local policy indicates priorities of different invocation methods. The API invoker selects an invocation method with a highest priority based on the priorities of the different invocation methods, to ensure that the selected invocation method is optimal.

In a possible implementation, whether the method for invoking the service API is applicable to the service API is determined.

In a possible implementation, the requesting, from the API information function entity based on the method information, an access token for invoking the service API includes: requesting, from the API information function entity when the invocation method is a client credential grant method, the access token for invoking the service API; obtaining a first authorization code when the invocation method is an authorization code grant method, and requesting, from the API information function entity by using the first authorization code, the access token for invoking the service API; or obtaining a second authorization code and a verification value when the invocation method is a PKCE method, and requesting, from the API information function entity by using the second authorization code and the verification value, the access token for invoking the service API. In a possible implementation, an identifier of an authorization function AuF is received from the API information function entity, where the identifier of the AuF indicates an address of the AuF; and the first authorization code is requested from the AuF based on the identifier of the AuF when the invocation method is the authorization code grant method; or the second authorization code is requested from the AuF based on the identifier of the AuF when the invocation method is the PKCE method. It may be understood that, when the invocation method is the authorization code grant method or the PKCE method, the API invoker needs to request the authorization code from the AuF. The identifier of the AuF is received from the API information function entity, so that the API invoker can determine the address of the AuF.

In a possible implementation, a scope is received from the API information function entity; and whether the scope includes a scope used when the API invoker requests the access token for invoking the service API is determined, where the scope indicates a scope in which the service API is allowed to be authorized. It may be understood that the scope received from the API information function entity is a scope in which the service API is authorized to access a user resource. Therefore, the scope used when the API invoker requests to the access token for invoking the service API cannot exceed the scope received from the API information function entity. The scope is sent to the API invoker, to avoid an invocation failure caused by an excessively large scope used when the API invoker uses the access token to invoke an API.

In a possible implementation, a PKCE security method is received from the API information function entity. The obtaining the second authorization code and a verification value when the invocation method is the PKCE method includes: generating a challenge value based on the verification value and the PKCE security method, where the challenge value is for verifying an identity of the API invoker.

In a possible implementation, second information is received from the API information function entity, where the second information includes updated method information; and the access token for invoking the service API is requested from the API information function entity based on the updated method information. The API invoker requests, based on the updated method information, the access token for invoking the service API, to avoid an invocation failure caused by invoking the service API by the API invoker by using old service API information.

In a possible implementation, second information is received from the API information function entity, where the second information includes an updated identifier of the AuF; and a third authorization code is requested from the AuF based on the updated identifier of the AuF, where the third authorization code is for requesting, from the API information function entity, the access token for invoking the service API.

In a possible implementation, second information is received from the API information function entity, where the second information includes an updated scope; and whether the updated scope includes a scope used when the API invoker requests the access token for invoking the service API is determined.

In a possible implementation, second information is received from the API information function entity, where the second information includes an updated PKCE security method; and a challenge value is generated based on the verification value and the updated PKCE security method.

In a possible implementation, the API invoker is accessing the service API by using the first information, and the method further includes: re-initiating, by the API invoker based on the second information, a request of the access token for invoking the service API. When the API invoker accesses the service API by using old service API information, for a same service API, the API invoker re-initiates invocation of the service API by using the received new second information. For example, the scope in the first information includes a user location, but the scope in the second information does not include the user location. The API invoker re-initiates invocation of the service API, to ensure that the API invoker uses the latest information, to improve authorization security and avoid privacy leakage.

In a possible implementation, before the receiving method information from the API information function entity, the method further includes: sending capability information to the API information function entity, where the capability information indicates an invocation method supported by the API invoker. For related descriptions, refer to related content in the first aspect. Details are not described herein again.

In a possible implementation, the sending capability information to the API information function entity includes: sending the capability information and an identifier of an API exposing function AEF to the API information function entity.

In a possible implementation, the method information includes one or more of the client credential grant, the authorization code grant, the proof key for code exchange PKCE, an implicit grant, and a resource owner password credentials grant. The implicit grant is applicable to an application program that does not need to be supported by a backend server, and the resource owner password credentials grant is applicable to a backend application program. For related descriptions, refer to related content in the first aspect. Details are not described herein again.

In a possible implementation, the receiving method information from the API information function entity includes: sending a discovery service request message to the API information function entity, where the discovery service request message is for requesting to discover the service API; and receiving a discovery service response message from the API information function entity, where the discovery service response message includes the method information.

In a possible implementation, the receiving method information from the API information function entity includes: sending a security method request message to the API information function entity, where the security method request message is for negotiating a security method; and receiving a security method response message from the API information function entity, where the security method response message includes the method information associated with the grant type. According to a third aspect, a method for invoking a service API is provided, and is applied to a common API framework. An API publishing function entity publishes the service API to an API invoker via an API information function entity, and the method includes: sending an identifier of the service API and first information to the API information function entity, where the first information includes a grant type, and the grant type indicates an authorization method for the service API.

Based on the method provided in the third aspect, the identifier of the service API and the corresponding grant type are sent to the API information function entity. Subsequently, the API invoker obtains the grant type for the service API from the API information function entity. In this way, when invoking the service API, the API invoker may determine, based on the grant type for the service API, the method for invoking the service API. For example, for a service API that can access user privacy, the grant type corresponding to the service API is published as an authorization code grant or a PKCE, so that user's participation in authorization is involved when the API invoker invokes the service API, thereby improving security performance.

In a possible implementation, the first information further includes an identifier of an API exposing function AEF.

In a possible implementation, after the sending an identifier of the service API and first information to the API information function entity, the method further includes: sending the identifier of the service API and second information to the API information function entity, where the second information is different from the first information.

In a possible implementation, a cause value is sent to the API information function entity, where the cause value indicates to update information corresponding to the service API.

In a possible implementation, the first information further includes one or more of an identifier of an authorization function AuF, a scope, and a PKCE security method, where the identifier of the AuF indicates an address of the AuF, the scope indicates a scope in which the service API is allowed to be authorized, and the PKCE security method indicates a method for generating a challenge value, where the challenge value is for verifying an identity of the API invoker.

In a possible implementation, the grant type includes one or more of a client credential grant, an authorization code grant, and a proof key for code exchange PKCE.

In a possible implementation, the grant type further includes an implicit grant and a resource owner password credentials grant. For related descriptions, refer to related content in the first aspect. Details are not described herein again.

In a possible implementation, the sending an identifier of the service API and first information to the API information function entity includes: sending a service API publish request message to the API publishing function entity, where the service API publish request message is for publishing the service API, and the service API publish request message includes the identifier of the service API and the first information.

According to a fourth aspect, an embodiment of this application provides an apparatus. The apparatus has a function of implementing behavior of the API information function entity in the foregoing method designs. The function may be implemented by hardware, or may be implemented by hardware executing corresponding software. The hardware or the software includes one or more modules corresponding to the foregoing function. For example, the apparatus may be an API information function entity, or may be a chip in the API information function entity. In a possible design, the apparatus is an API information function entity, the API information function entity includes a processor, and the processor is configured to support the API information function entity in performing a corresponding function in the foregoing method. Further, the API information function entity may further include a communication interface. The communication interface is configured to support communication between the API information function entity and a user plane entity of a central unit or another network element. Further, the API information function entity may further include a memory. The memory is configured to be coupled to the processor, and the memory stores program instructions and data necessary for the API information function entity.

According to a fifth aspect, an embodiment of this application provides an apparatus. The apparatus has a function of implementing behavior of the API invoker in the foregoing method designs. The function may be implemented by hardware, or may be implemented by hardware executing corresponding software. The hardware or the software includes one or more modules corresponding to the foregoing function. For example, the apparatus may be an API invoker, or may be a chip in the API invoker.

In a possible design, the apparatus is an API invoker, the API invoker includes a processor, and the processor is configured to support the API invoker in performing a corresponding function in the foregoing method. Further, the API invoker may further include a communication interface. The communication interface is configured to support communication between the API invoker and a user plane entity of a central unit or another network element. Further, the API invoker may further include a memory. The memory is configured to be coupled to the processor, and the memory stores program instructions and data necessary for the API invoker.

According to a sixth aspect, an embodiment of this application provides an apparatus. The apparatus has a function of implementing behavior of the API publishing function entity in the foregoing method designs. The function may be implemented by hardware, or may be implemented by hardware executing corresponding software. The hardware or the software includes one or more modules corresponding to the foregoing function. For example, the apparatus may be an API publishing function entity, or may be a chip in the API publishing function entity. In a possible design, the apparatus is an API publishing function entity, the API publishing function entity includes a processor, and the processor is configured to support the API publishing function entity in performing a corresponding function in the foregoing method. Further, the API publishing function entity may further include a communication interface. The communication interface is configured to support communication between the API publishing function entity and a user plane entity of a central unit or another network element. Further, the API publishing function entity may further include a memory. The memory is configured to be coupled to the processor, and the memory stores program instructions and data necessary for the API publishing function entity. According to a seventh aspect, an embodiment of this application provides a communication system. The system includes the API invoker and the API information function entity in the foregoing aspects, the system includes the API information function entity and the API publishing function entity in the foregoing aspects, or the system includes the API invoker, the API publishing function entity, and the API information function entity in the foregoing aspects.

According to an eighth aspect, an embodiment of this application provides a computer storage medium, configured to store computer software instructions used by the API information function entity. The computer software instructions include a program designed to execute an action of the API information function entity in the first aspect or the fourth aspect.

According to a ninth aspect, an embodiment of this application provides a computer storage medium, configured to store computer software instructions used by the API invoker. The computer software instructions include a program designed to execute an action of the API invoker in the second aspect or the fifth aspect.

According to a tenth aspect, an embodiment of this application provides a computer storage medium, configured to store computer software instructions used by the API publishing function entity. The computer software instructions include a program designed to execute an action of the API publishing function entity in the third aspect or the sixth aspect.

According to an eleventh aspect, an embodiment of this application provides a chip system, applied to an API information function entity. The chip system includes at least one processor, memory, and interface circuit. The memory, the interface circuit, and the at least one processor are interconnected by using a line, and the at least one memory stores instructions. The instructions are executed by the processor to perform an operation of the API information function entity in the foregoing method.

According to a twelfth aspect, an embodiment of this application provides a chip system, applied to an API invoker. The chip system includes at least one processor, memory, and interface circuit. The memory, the interface circuit, and the at least one processor are interconnected by using a line, and the at least one memory stores instructions. The instructions are executed by the processor to perform an operation of the API invoker in the foregoing method.

According to a thirteenth aspect, an embodiment of this application provides a chip system, applied to an API publishing function entity. The chip system includes at least one processor, memory, and interface circuit. The memory, the interface circuit, and the at least one processor are interconnected by using a line, and the at least one memory stores instructions. The instructions are executed by the processor to perform an operation of the API publishing function entity in the foregoing method.

According to a fourteenth aspect, a computer program product is provided, and includes a computer program or instructions. When the computer program or the instructions are run on a computer, the computer is enabled to perform the method according to any one of the foregoing possible implementations.

In the foregoing solutions, in the CAPIF, the identifier of the service API and the grant type are received by the API information function entity, so that the API invoker can obtain the grant type from the API information function entity. Further, when invoking the service API, the API invoker may invoke the service API based on the grant type. In this way, service APIs of different grant types can be invoked in the CAPIF architecture, thereby improving security performance.

### BRIEF DESCRIPTION OF DRAWINGS

FIG. 1 is a diagram of an architecture of a communication network to which this application is applicable;
FIG. 2 is a diagram of a CAPIF architecture to which this application is applicable;
FIG. 3 is a schematic flowchart of invoking an API;
FIG. 4 is another schematic flowchart of invoking an API;
FIG. 5 is still another schematic flowchart of invoking an API;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a schematic flowchart of a communication method 900 according to an embodiment of this application;
FIG. 10 is a block diagram of an apparatus according to an embodiment of this application; and
FIG. 11 is a diagram of a structure of an apparatus according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, a plurality of means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in this application are merely used for differentiation for ease of description, and are not used to limit the scope of this application. The sequence numbers of the following processes do not mean execution sequences, and the execution sequences of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

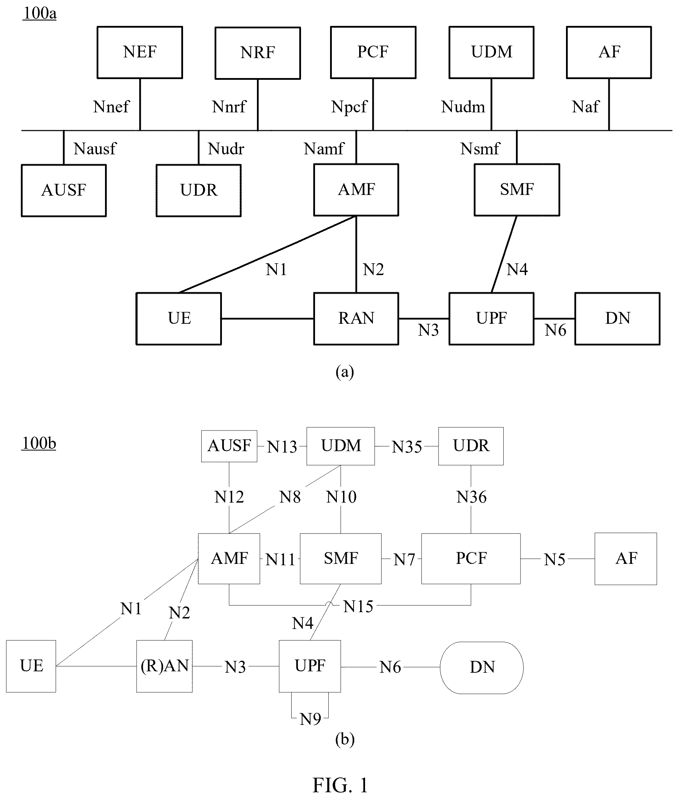

The following describes, with reference to (a) and (b) in FIG. 1, a 5G system to which embodiments of this application are applicable. It should be understood that the 5G system described in this specification is merely an example, and should not constitute any limitation on this application.

It should be further understood that some network elements in the 5G system may communicate with each other through a service-based interface or a point-to-point interface. The following separately describes a 5G system framework based on a point-to-point interface and a 5G system framework based on a service-based interface with reference to (a) in FIG. 1 and (b) in FIG. 1. For example, FIG. 1 is a diagram of an architecture of a 5G system to which an embodiment of this application is applicable. The network architecture may include but is not limited to the following network elements (or referred to as function network elements, function entities, nodes, devices, or the like):
a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network exposure function (network exposure function, NEF), a network repository function (NF repository function, NRF), an authentication server function (authentication server function, AUSF), a unified data management (unified data management, UDM), and a unified data storage (unified data storage, UDR).

The following briefly describes the network elements shown in FIG. 1.
1. User equipment (user equipment, UE) may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a communication device, a user agent, or a user apparatus. The user equipment may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device or wearable device connected to a wireless modem, a terminal device in a 5G network, or a terminal device in a future evolved public land mobile network (public land mobile network, PLMN).
   In addition, the user equipment may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.
   It should be understood that the user equipment may be any device that can access a network. The user equipment and the access network device may communicate with each other by using an air interface technology.
2. The (radio) access network ((radio) access network, (R)AN) device is configured to provide a network access function for authorized user equipment in a specific area, and is capable of using transmission tunnels of different quality of service based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3. The user plane function (user plane function, UPF) network element is for packet routing and forwarding, quality of service (quality of service, QoS) handling for user plane data, and the like. In a 5G communication system, a user plane network element may be the user plane function (user plane function, UPF) network element. In a future communication system, the user plane network element may still be the UPF network element, or may have another name. This is not limited in this application.

4. The access and mobility management function (access and mobility management function, AMF) network element is mainly for mobility management and access management, for example, user location update, user registration with a network, and user handover.

In a future communication system, an access and mobility management device may still be the AMF, or may have another name. This is not limited in this application.

5. The session management function (session management function, SMF) network element is mainly configured for session management, UE internet protocol (internet protocol, IP) address allocation and management, selection of UPF that provides a packet forwarding function, termination of interfaces towards policy control and charging functions, downlink data notification, and so on.

In a future communication system, a session management network element may still be the SMF network element, or may have another name. This is not limited in this application.

6. The policy control function (policy control function, PCF) network element is a policy management function for guiding network behavior, and provides policy rule information and the like for a control plane function network element (such as the AMF or the SMF).

In a future communication system, a policy control network element may still be the PCF network element, or may have another name. This is not limited in this application.

7. The application function (application function, AF) mainly supports interaction with the 3GPP core network to provide services, for example, influence on data routing decision, and providing third-party services for a policy control function or a network side.

In a future communication system, an application network element may still be the AF network element, or may have another name. This is not limited in this application.

8. The unified data management (unified data management, UDM) network element is configured to store user data, for example, subscription data and authentication/authorization data.

In the future communication system, a unified data management network element may still be the UDM network element, or may have another name. This is not limited in this application.

9. The authentication server function (authentication server function, AUSF) network element is configured to provide an authentication service, generate a key to implement two-way authentication for user equipment, and support a unified authentication framework.

In a future communication system, an authentication server function network element may still be the AUSF network element, or may have another name. This is not limited in this application.

10. The data network (data network, DN) is a network beyond a carrier network. The carrier network may access a plurality of DNs, and a plurality of services may be deployed on the DN, to provide a service such as data and/or voice for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

11. The network exposure function (network exposure function, NEF) network element is mainly configured to support exposure of capabilities and events. The NEF network element may provide an exposure interface of a network function, so that a third-party application program can access various services and resources in the 5G network. The NEF network element may expose network functions to third-party application programs, so that the application programs can provide more abundant services and applications by using the network functions.

12. The network repository function (NF repository function, NRF) network element is mainly configured to maintain information about network resources, including network functions, services, and application programs. The NRF network element may provide network resource query and discovery functions, so that a third-party application program can quickly find required network resources, and provide more abundant services and applications by using the resources. Nausf, Nnef, Npcf, Nudm, Naf, Namf, Nsmf, N1, N2, N3, N4, and N6 in (a) in FIG. 1 are interface sequence numbers. For meanings of the interface sequence numbers, refer to meanings defined in a 3GPP standard protocol. This is not limited herein.

In the network architecture shown in (a) in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identifier information of an N3 connection, data buffering indication information, and a downlink data notification message. The UPF and the DN may interact with each other through an N6 interface, and the N6 interface may be for transmitting user plane data and the like. Relationships between other interfaces and network elements are shown in (a) in FIG. 1. For brevity, details are not described herein.

FIG. 1(b) is a diagram of a 5G network architecture based on a point-to-point interface. For descriptions of functions of network elements in the figure, refer to descriptions of functions of corresponding network elements in FIG. 1(a). Details are not described again. A main difference between (b) in FIG. 1 and (a) in FIG. 1 lies in that interfaces between network elements in (b) in FIG. 1 are point-to-point interfaces rather than service-based interfaces.

In the architecture shown in (b) in FIG. 1, names and functions of interfaces between network elements are as follows:
(1) N1 is an interface between the AMF and the UE, and is configured to transfer a QoS control rule to the UE, and so on.
(2) N2 is an interface between the AMF and the RAN, and is configured to: transfer radio bearer control information from a core network side to the RAN, and so on.
(3) N3 is an interface between the RAN and the UPF, and is configured to transmit user plane data and so on.
(4) N4 is an interface between the SMF and the UPF, and is configured to transfer information between a control plane and a user plane, including delivery of forwarding rules, QoS control rules, traffic statistics rules, and the like from the control plane to the user plane, and reporting of user plane information.
(5) N5 is an interface between the AF and the PCF, and is configured to deliver an application service request and report a network event.
(6) N6 is an interface between the UPF and the DN, and is configured to transmit user plane data and so on.
(7) N7 is an interface between the PCF and the SMF, and is configured to deliver a protocol data unit (protocol data unit, PDU) session granularity control policy and a service data flow granularity control policy.
(8) N8 is an interface between the AMF and the UDM, and is used by the AMF to obtain, from the UDM, subscription data related to access and mobility management and authentication data, and used by the AMF to register current mobility management related information of the UE with the UDM.
(9) N9 is an interface between UPFs, and is configured to transfer uplink and downlink subscriber data flows between the UPFs.
(10) N10 is an interface between the SMF and the UDM, and is used by the SMF to obtain, from the UDM, subscription data related to session management, and used by the SMF to register current session-related information of the UE with the UDM.
(11) N11 is an interface between the SMF and the AMF, and is configured to: transfer PDU session tunnel information between the RAN and the UPF, transfer a control message to be sent to the UE, transfer radio resource control information to be sent to the RAN, and so on.
(12) N12 is an interface between the AMF and the AUSF, and is used by the AMF to initiate an authentication procedure to the AUSF, where an SUCI may be carried as a subscription identifier.
(13) N13 is an interface between the UDM and the AUSF, and is used by the AUSF to obtain a user authentication vector from the UDM, to perform the authentication procedure.
(14) N15 is an interface between the PCF and the AMF, and is configured to deliver a UE policy and an access control related policy.
(15) N35 is an interface between the UDM and the UDR, and is used by the UDM to obtain user subscription data information from the UDR.
(16) N36 is an interface between the PCF and the UDR, and is used by the PCF to obtain policy-related subscription data and application data-related information from the UDR.

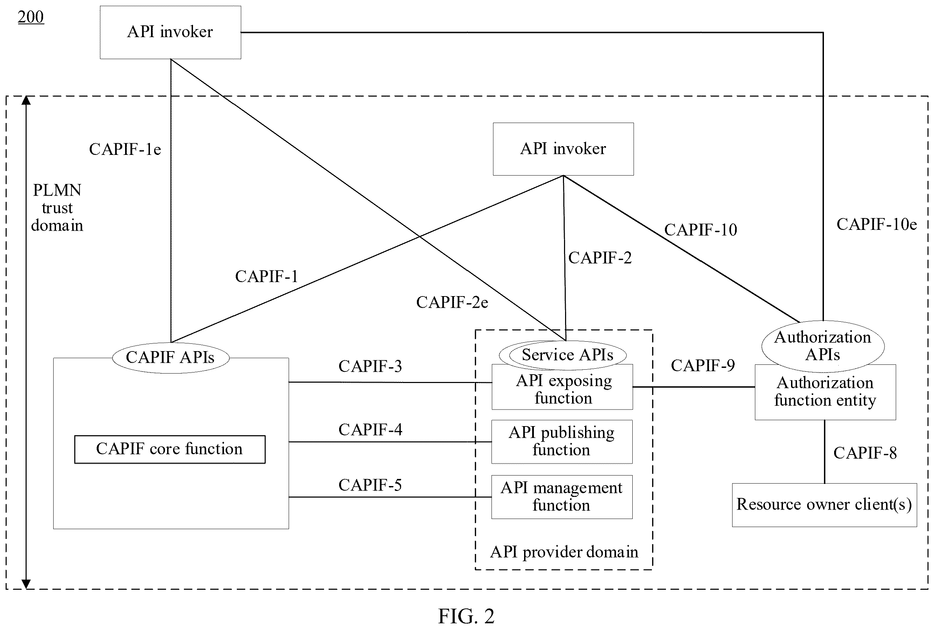

The solutions in embodiments of this application may be applied to the network architecture shown in FIG. 2. FIG. 2 is a diagram of a CAPIF architecture. It may be understood that the following terms are described by using a current NR system as an example. However, it should be understood that in another communication system (for example, a future sixth-generation communication system), the following terms may have other names. This is not limited in this application. The architecture shown in FIG. 2 mainly includes the following network elements:
1. API invoker (API invoker): The API invoker is usually provided by a third-party application provider that has a service agreement with a carrier network. The API invoker has the following functions: (1) providing an identity of the API invoker and other information required for API invoker authentication, and supporting authentication; (2) supporting mutual authentication with a CAPIF core function entity; (3) obtaining authorization before accessing a service API; (4) discovering service API information; and (5) invoking the service API. The API invoker may be an AF, UE, or the like, or may be a client and a third-party application on the UE. The third-party application is an application developed by a non-operating system or a software developer, and is usually for providing an additional function or service on an operating system or another application, such as a social media application program, a music player, or a weather application program. For a location of the API invoker in the communication network, refer to the AF network element in FIG. 1(a) and FIG. 1(b). Functions (3), (4), and (5) of the API invoker are related to the present invention.
2. The CAPIF core function (CAPIF core function, CCF) entity is a central memory of service API policies and is an authentication and authorization center of the API invoker and the service API. The CCF entity has the following functions: (1) authenticating the API invoker based on the identity and the other information that are required for API invoker authentication; (2) supporting mutual authentication with the API invoker; (3) providing authorization for the API invoker before the service API is accessed; (4) publishing, storing, and supporting discovery of service API information; (5) controlling service API access according to a policy configured by a PLMN operator; (6) storing a service API invocation log, and providing the service API invocation log for an authorization entity; (7) charging based on the service API invocation log; (8) monitoring service API invocation; (9) API invoker addition and API invoker removing; (10) storing policy configurations related to the CAPIF and the service API; (11) supporting access log audit (for example, abuse detection); and (12) supporting another CAPIF core function in publishing and discovering service API information during interconnection with the CAPIF. Functions (1), (3), and (4) of the CAPIF core function entity are related to the present invention.
3. An API exposing function (API exposing function, AEF) entity is an entry for a service provider to open a service externally. The API invoker can use, via the AEF entity, the service provided by service provider. The AEF entity has the following functions: (1) authenticating the API invoker based on the identity and the other information that are required for API invoker authentication and that are provided by the CAPIF core function; (2) verifying the authorization provided by the CAPIF core function; and (3) recording service API invocation of the CAPIF core function. In a 3GPP network, the AEF may be an NEF. That is, for a location of the AEF in the communication network, refer to the NEF network element in FIG. 1(a). The NEF is an API interface externally opened by an operator network, and provides interaction between an external server and an internal operator network. It can be understood that, because a service provider exposes a service to the API invoker on the AEF by using a service API, the API invoker usually invokes the service API by sending a request to the AEF.
4. An API publishing function (API publishing function) entity is a function network element that enables an API provider to publish an API. Information about the service API may be published to the CAPIF core function entity, so that the API invoker finds the information about the service API on the CAPIF core function entity. It should be noted that the API publishing function entity and the NEF may be co-deployed.
5. An API management function (API management function) entity manages the service API, for example, monitoring a status of the service API and recording invocation information. It should be noted that the API management function entity and the NEF may be co-deployed.
6. Authorization function (Authorization Function, AuF) entity is configured to obtain user authorization. The AuF entity is an authorized server that authorizes the client to access user data after user authorization. It should be noted that the AuF entity and the CCF entity may be co-deployed.
7. A resource owner client (Resource Owner Client, RO Client) is an application client used by a user and can display an operation interface for the user, for example, an operating system or a browser. The RO client may be an application program on the UE in FIG. 1(a) and FIG. 1(b).

In FIG. 2, a public land mobile network trust domain (public land mobile network trust domain, PLMN trust domain) represents an area trusted by a public land mobile network. An API provider domain (API provider domain) represents an area in which an API provider is located.

A connection relationship between the foregoing network elements is as follows:
An interface between an API invoker outside the PLMN trust domain and the CAPIF core function entity is a CAPIF-1e interface, an interface between the API invoker and the AEF entity is a CAPIF-2e interface, and an interface between the API invoker and the AuF entity is a CAPIF-10e interface. An interface between an API invoker in the PLMN trust domain and the CAPIF core function entity is a CAPIF-1 interface, an interface between the API invoker and the AEF entity is a CAPIF-2 interface, and an interface between the API invoker and the AuF entity is a CAPIF-10 interface. An interface between the CAPIF core function entity and the AEF entity is a CAPIF-3 interface, an interface between the CAPIF core function entity and the API publishing function entity is a CAPIF-4 interface, and an interface between the CAPIF core function entity and the API management function is a CAPIF-5 interface. An interface between the AEF entity and the AuF entity is a CAPIF-9 interface, and an interface between the AEF entity and the RO client is a CAPIF-8 interface.

To facilitate understanding of embodiments of this application, the following describes some terms in this application as examples.
1. Application programming interface (API): The API includes the following types: (1) CAPIF API: provides some common APIs. The CAPIF API is usually provided by a system or a platform and provides an entry to the CAPIF core function entity for an API invoker. (2) Service API: A system component abstracts a service from an underlying mechanism and exposes the service to the API invoker. The service may be of any type, such as a Web service, a cloud service, and a database service. The service API is usually provided by a service provider, is for accessing and using a service, and provides an entry to the API exposing function entity for the API invoker. (3) Authorization API: used to verify a user identity and authorize a user to access a resource. The authorization API is usually provided by an identity authentication and authorization system, is for protecting security of an application program and data, and provides an entry to an authorization function network entity for the API invoker. Differences between the three types of APIs lie in functions. The CAPIF API is a common API framework for implementing various functions. The service API is for accessing and using services. The authorization API is for authorization and authentication.
2. Resource Owner (RO): The resource owner may be a 3GPP subscriber, for example, a user (user).
3. Access Token: The access token is a key that may be used by a client to access data authorized by a user on a resource server.
4. Scope: The scope specifies data that is of a user and that the API invoker can access. For example, an application program may request one or more scopes, requested scope information is presented to a user on a screen, and an access token issued to the application program is limited to only an authorized scope.

Oauth (Open Authorization) is an authorization protocol for authorizing a third-party application program to access a resource of a user on another service provider without sharing the user's credentials. A main purpose of the OAuth protocol is to resolve a problem that a user needs to provide a user name and a password of the user when using a third-party application program, thereby improving user privacy security.

Open authorization 2.0 (Open Authorization 2.0, OAuth 2.0) is a next-generation version of the OAuth protocol, and is for authorizing a third-party application, which is also referred to as a client (the third-party application, the client, and the like are all API invokers), to obtain user resources. The client refers to an application program that needs to access a user resource, and a user is an owner of the resource. For example, a user may determine whether to authorize a third-party application to access a resource (such as a user profile, a photo, or a video) of the user on a service provider. OAuth 2.0 authorization may be understood as a process in which an API invoker obtains an access token (access_token). The API invoker can obtain the access token only after being authorized. OAuth 2.0 defines the following grant types:
1. Client_credential grant (client_credential Grant): A client uses identity information of the client to request an access token from an authentication server. This applies when the client needs to access a resource of the client without user participation.
2. Authorization code grant (Authorization Code Grant): A client requests authorization from an authentication server. The authentication server requests authorization from a user. After the user approves the authorization, the authentication server sends an authorization code to the client, and the client uses the authorization code to request an access token from the authentication server.
3. Implicit grant (Implicit Grant): A client directly requests an access token from an authentication server without an authorization code. This applies when the client cannot keep the authorization code confidential. A token is visible to visitors and does not need to be authenticated by clients.
4. Resource owner password credentials grant (Resource Owner Password Credentials Grant): A client uses a user name and a password of a user to request an access token from an authentication server. This applies when the client and the user highly trust each other and a quantity of users is small.
5. Extended grant: An extension of an authorization method, for example, a proof key for code exchange (Proof Key for Code Exchange, PKCE), is enhancement of the foregoing authorization code grant, and is for preventing an authorization code (Authorization Code) attack. The authorization code attack is a common network attack. An attacker steals an authorization code and uses the authorization code to obtain an access token (Access Token) to obtain user privacy information.

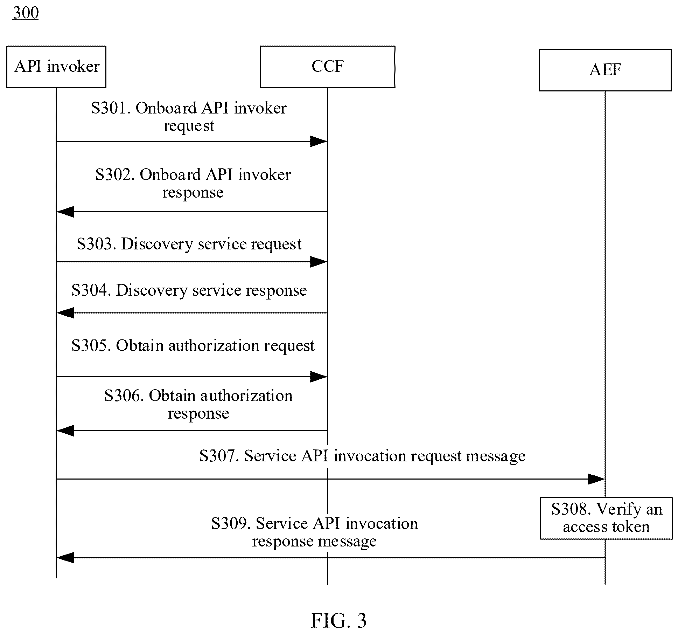

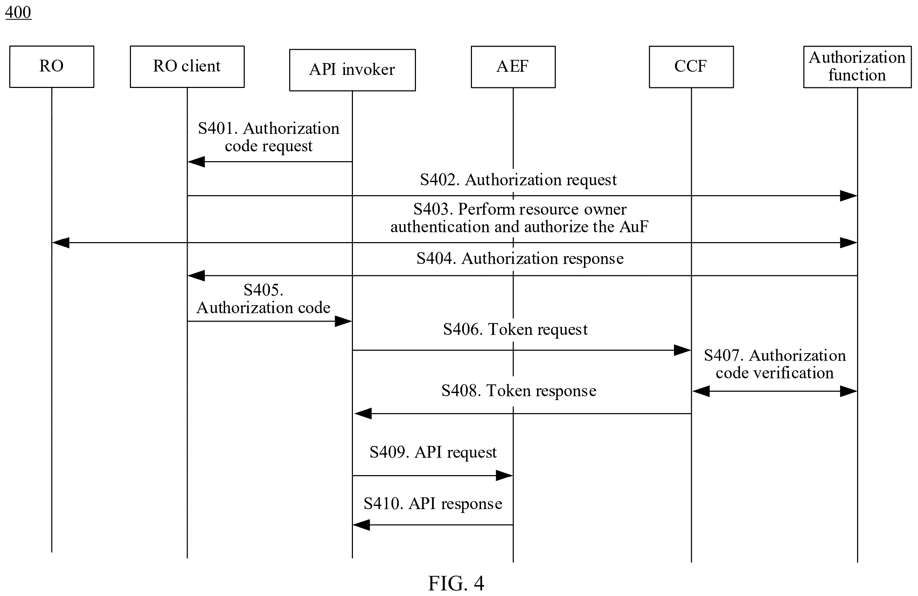

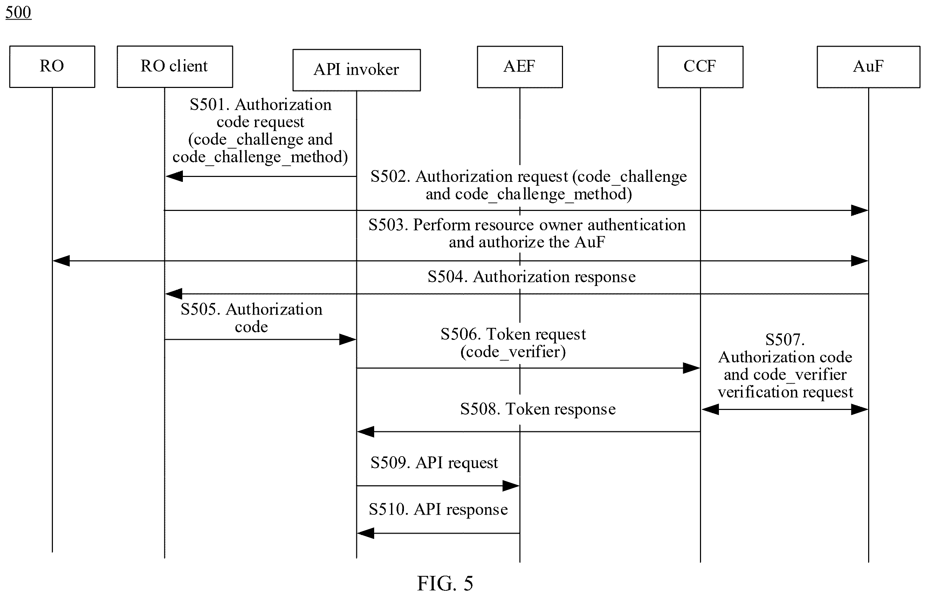

The implicit grant and the resource owner password credentials grant have low security. The following describes three authorization methods in the CAPIF: the client credential grant (FIG. 3), the authorization code grant (FIG. 4), and the PKCE (FIG. 5).

A transport layer security (Transport Layer Security, TLS) protocol protects network communication security includes the following implementations:
1. TLS-PSK (Pre-Shared Key) is a TLS implementation based on a pre-shared key. During a TLS handshake process, a client and a server use the pre-shared key for identity authentication and key exchange. This is applicable to a scenario in which only a few trusted devices need to perform communication, for example, communication between internet of things devices.
2. TLS-PKI (Public Key Infrastructure) is a TLS implementation based on public key infrastructure. During a TLS handshake process, a client and a server use digital certificates for identity authentication and key exchange. This is applicable to a scenario that requires large-scale communication, such as websites and mobile applications.
3. A TLS with OAuth token (TLS with OAuth token) is a TLS implementation based on the OAuth protocol. During a TLS handshake process, a client uses the OAuth token for identity authentication, and a server uses a digital certificate for identity authentication and key exchange. This is applicable to a scenario in which secure API invocation is required, such as mobile application programs and cloud services.

With reference to steps in FIG. 3, the following describes a client credential grant (client_credential Grant) mode in the CAPIF, to implement a procedure in which a CCF authorizes an API invoker to invoke a specific API from an AEF. The client credential grant method may be understood as that the API invoker requests an access token from the CCF based on identity information of the invoker. The client credential grant is a grant type in a TLS with OAuth token authentication method.

Step 301. The API invoker sends an onboard API invoker request (Onboard API Invoker Request) message to the CCF, where the onboard API invoker request message is for registering the API invoker with the CCF.

The onboard API invoker request message includes onboarding information (onboarding information) and APIs for enrollment (APIs for enrollment). The onboarding information includes information about the API invoker. The APIs for enrollment include a list of APIs to be enrolled. The APIs for enrollment may be understood as preconfigured criteria that are for discovering some service APIs and that are sent by the API invoker to the CCF when the API invoker registers with the CCF.

Step 302. The CCF sends an onboard API invoker response (Onboard API Invoker Response) message to the API invoker.

The onboard API invoker response message includes an onboarding status, enrolled information, and service API information. The onboarding status indicates an onboarding result, for example, success or failure. The enrolled information includes an API invoker ID and an authentication method. The API invoker ID is assigned by the CCF to the API invoker, the authentication method indicates an authentication method used by the API invoker subsequently, and the authentication method includes one or more of a TLS-PSK method, a TLS-PKI method, and a TLS with OAuth token method. The service API information indicates registered API information, and the service API information includes an identifier of a service API, an AEF location, an IP address, a port number, a protocol, and the like.

Step 303. The API invoker sends a discovery service request (Discovery Service Request) message to a CAPIF core function entity. The discovery service request message is for requesting to discover the service API.

The discovery service request includes the API invoker ID and request information. The request information includes a criterion for discovering some APIs, and the criterion may be information about a preference of the API invoker, for example, an AEF location, a protocol, and the like preferred by the API invoker.

Step 304. The CCF sends a discovery service response (Discovery Service Response) message to the API invoker.

The discovery service response message includes service API information. The CCF obtains the service API information based on the request information sent by the API invoker in step 303. The service API information includes an identifier of a service API, an AEF location, an IP address, a port number, a protocol, and the like.

It should be noted that the service API information sent by the CCF in step 302 may be preconfigured default service API information obtained based on the APIs for enrollment in step 301, and the service API information sent by the CCF in step 304 may be service API information obtained based on the request information in step 303.

Step 305. The API invoker sends an obtain authorization request (Obtain Authorization Request) message to the CCF. The obtain authorization request message is used by the API invoker to request the CCF to authenticate an identity of the API invoker and obtain an access token.

It should be noted that, when the authentication method sent by the CCF to the API invoker in step 302 is the TLS with OAuth token method, the API invoker sends the obtain authorization request message to the CCF.

The obtain authorization request message includes the API invoker ID and an identifier of the service API.

Step 306. After the CCF determines that the API invoker can be authorized to access the identifier of the service API, the CCF sends an obtain authorization response (Obtain Authorization Response) message to the API invoker.

That the CCF determines that the API invoker can be authorized to access the service API may be understood as that, when the CCF verifies that both the API invoker ID and the identifier of the service API are valid, the CCF authorizes the API invoker to access the service API. Being valid means that the API invoker ID is the same as the API invoker ID received by the CCF in step 304 and that the identifier of the service API is the same as the identifier of the service API sent by the CCF to the API invoker in step 304. The obtain authorization response message includes an access token (access_token). The access token is for granting the API invoker access to a specific service API. Optionally, the obtain authorization response message further includes a refresh token (refresh_token), and the refresh token is for authorizing the API invoker to update the access token. The refresh token and the access token include a declaration and a signature. The declaration includes the following content: expiry time, an API invoker ID, an AEF identifier, and a service API identifier. The signature is a digital signature of the CCF for a token (token). Optionally, the declaration further includes a user identifier.

It should be noted that the expiry time in the token may be for limiting time that a user grants the API invoker to access a user resource via a specific AEF and a specific service API. In other words, if the "expiry time" is exceeded, it indicates that the access token has expired. In this case, the refresh token needs to be used to apply for a new access token.

Step 307. The API invoker sends a service API invocation request (Service API Invocation Request) message to the AEF.

The service API invocation request message includes an API invoker ID, an identifier of a service API, and an access token. The access token includes a declaration and a signature, and the access token is obtained by the API invoker from step 306. Optionally, the service API invocation request message further includes a user identifier.

It can be understood that, because a service provider exposes a service to the API invoker on the AEF by using a service API, the API invoker usually invokes the service API by sending a request to the AEF.

Step 308. The AEF verifies the access token in the service API invocation request message.

For example, AEF verifies the declaration and signature in the access token. The AEF verifies the signature in the access token: The AEF verifies the signature of the access token by using a preconfigured CCF authentication credential (for example, a certificate). The AEF verifies the declaration in the access token: The AEF determines whether the API invoker ID in the declaration in the access token is the same as the API invoker ID in the message, and whether the identifier of the service API in the declaration in the access token is the same as the requested identifier of the service API in the message. Optionally, when the invocation request message further includes the user identifier, the AEF further determines whether the user identifier in the declaration in the access token is consistent with the requested user identifier in the message, and the AEF determines, based on the expiry time, whether a current access token is expired.

If both the signature and the declaration in the access token are successfully verified, the AEF performs step 309. Otherwise, the API invocation request is rejected.

Step 309. The AEF sends a service API invocation response (Service API Invocation Response) message to the API invoker.

If the AEF successfully verifies the access token, the API invocation response message indicates that service API invocation succeeds. Otherwise, the API invocation response message indicates that service API invocation fails.

A main difference between FIG. 4 and FIG. 3 lies in that a user participates in an authorization process in FIG. 4, so that an API invoker can be prevented from obtaining user data by directly obtaining an access token without authorization of the user. With reference to steps in FIG. 4, the following describes an authorization code grant (authorization code grant) mode in the CAPIF, to implement a procedure in which a CCF authorizes an API invoker to invoke a specific API on an AEF. The authorization code authorization method may be understood as that the API invoker obtains an authorization code in case of user authorization and then uses the authorization code to obtain an access token. The authorization code grant is a grant type in a TLS with OAuth token (TLS with OAuth token) authentication method.

Step 401. The API invoker sends an authorization code request message to a resource owner client (Resource Owner client, RO client).

The authorization code request is used by the API invoker to request the RO client to obtain an authorization code from an authorization function (Authorization Function, AuF). The authorization code request includes an API invoker ID, a scope, and a redirect uniform resource locator (redirect Uniform Resource Locator, redirect URL). Optionally, an identifier of the AuF is further included. The scope indicates a scope in which authorization is allowed, and may be represented by a parameter in an API request message, such as an API identifier, an API ID, or an API input parameter. It should be noted that, the scope is for defining a scope in which the API invoker accesses a user resource. The API invoker may request one or more scopes, and an RO (user) may reject or accept the scope requested by the API invoker. An access token obtained by the API invoker includes a scope in which the user finally allows the API invoker to access a resource. Therefore, the access token can be used only to access resources within the scope. The redirect URL is for returning an address of the authorization code, and the address of the authorization code usually indicates an address of the API invoker. The identifier of the AuF indicates an address of the AuF.

Step 402. The RO client sends an authorization request (Authorization Request) message to the AuF. The authorization request message is for requesting the authorization code.

The authorization request message includes a response type (response type), an API invoker ID, a redirect URL, and a scope. The response type is "code", and the "code" indicates that a grant type is an authorization code grant. The API invoker ID, the redirect URL, and the scope are obtained from the API invoker in step 401.

Optionally, when the authorization request in step 401 includes the identifier of the AuF, the RO client determines the address of the AuF based on the identifier of the AuF, and then sends the authorization request message to the AuF.

Step 403. The RO agrees to relevant authorization to the AuF.

The RO may be understood as a user. In an implementation, the AuF sends authorization inquiry information to the RO client based on the scope. For example, if the scope indicates that an API can obtain location information, the AuF sends authorization inquiry information to the RO client, where the information may be encapsulated by using a hypertext transfer protocol (Hypertext Transfer Protocol, HTTP), and finally the RO client parses the information into content including "whether to allow the API invoker to access your location information". The user can click "Agree" or "Disagree". If the user agrees, the RO client sends a user agreement result to the AuF. In this way, the AuF is authorized by the RO.

Optionally, after the RO client and the AuF complete the authentication on the RO, the RO agrees to the related authorization to the AuF.

For example, the RO client and the AuF may perform authentication by using an HTTP-based user name and password. The RO enters a pre-registered user name and password into the RO client. The AuF verifies whether the user name and the password are the same as a user name and a password stored in a database, and completes authentication on the RO if the user name and password are the same as the password corresponding to the user name stored in the database. Step 404. The AuF sends an authorization response (Authorization Response) message to the RO client.

After the AuF obtains authorization from the RO, the AuF sends the authorization response message to the RO client, where the authorization response message includes the authorization code and the redirect URL.

It may be understood that the AuF sends the authorization code to the API invoker via the RO client. An address of the API invoker is the redirect URL in the authorization request message sent by the API invoker in step 401.

Step 405. The RO client sends the authorization code to the API invoker.

The address of the API invoker is the redirect URL received by the RO client in step 404.

Step 406. The API invoker sends a token request message to the CCF to request a token.

The token request message includes a grant type (grant type), an authorization code, and a redirect URL. The grant type is "authorization code (authorization_code) grant". The authorization code is obtained by the API invoker in step 405. The redirect URL indicates the address of the API invoker. Step 407. The CCF requests the AuF to verify the authorization code of the API invoker, and the AuF verifies the authorization code and returns a verification result.

The AuF verifies whether an authorization code and a redirect URL that are sent by the CCF are the same as the authorization code and the redirect URL that are sent by the AuF to the RO client in the authorization response message in step 404. If they are the same, the authorization code verification succeeds, and step 408 is performed. If they are different, the authorization code verification fails.

Step 408. When the authorization code verification succeeds, the CCF sends a token response message to the API invoker.

The token response message includes the access token. Optionally, a refresh token is further included. The refresh token is for obtaining a next access token. When the access token needs to be updated, the user does not need to perform an authorization operation again. Therefore, the user can be prevented from frequently performing the authorization operation.

It should be noted that the access token includes a scope and a signature. The scope may represent a scope in which the user grants the API invoker access to a user resource. For example, the user may specify, by using the scope, that the API invoker can access only a user name, a profile picture, and the like.

Step 409. The API invoker sends an API request (API Request) message to the AEF.

The API request message includes an access token, and the access token is for requesting the AEF to invoke a related API.

Step 410. The AEF sends an API response (API Response) message to the API invoker.

Before sending the API response message, the AEF verifies the signature and scope of the access token. For example, in a signature verification manner, the AEF verifies the signature of the access token by using a preconfigured CCF authentication credential (for example, a certificate). For example, in a scope verification manner, whether the scope in the access token is within the scope in which the user is allowed to access is verified. If the signature and the scope in the access token are successfully verified, the API response message is for granting the API invoker access to the user resource.

A difference between FIG. 5 and FIG. 4 lies in that in FIG. 5, authorization is implemented by using an OAuth 2.0 PKCE. The PKCE may be understood as that the API invoker adds a random character string (referred to as code_verifier) to the authorization request, and uses a hash value (referred to as code_challenge) of the character string in the authorization code request to verify validity of the authorization code. In this way, even if an attacker steals the authorization code, the attacker cannot use the authorization code to obtain the access token because the attacker cannot provide correct code_verifier. With reference to steps in FIG. 5, a PKCE mode in the CAPIF is described, to implement a procedure in which a CCF authorizes an API invoker to invoke a specific API from the AEF. The PKCE is a grant type in a TLS with OAuth token (TLS with OAuth token) authentication method.

Step 501. The API invoker sends an authorization code request message to a resource owner client (Resource Owner client, RO client). For a specific step, refer to step 401.

A difference from step 401 lies in that the authorization code request message sent by the API invoker to the RO client further includes a challenge value (code_challenge) and a security method (code_challenge_method). The API invoker generates a verification value (code_verifier) first, and generates code_challenge based on code_verifier and code_challenge_method.
code_verifier may be a random number. code_challenge can be generated by using code_verifier or code_challenge_method in either of the following manners:
   (1) code_challenge and code_verifier are the same. In this case, the security method is null (represented by plain).
   (2) A hash operation is performed on code_verifier to generate code_challenge. For example, code_challenge_method is a secure hash algorithm (Secure Hash Algorithm, SHA) 256 (represented by S256).
code_challenge_method indicates the security method for generating code_challenge. For example, the security method may include null and SHA256.

Step 502. The RO client sends an authorization request (Authorization Request) message to an AuF. The authorization request message is for requesting an authorization code. For a specific step, refer to step 402.

A difference from step 402 lies in that the authorization request message further includes code_challenge and code_challenge_method.After receiving the authorization request message, the AuF stores the authorization code, code_challenge, and code_challenge_method through association. The storage through association is storing a correspondence between the authorization code, code_challenge, and code_challenge_method.For example, code_challenge and code_challenge_method that correspond to the received authorization code may be subsequently determined based on the received authorization code.

Step 503 to step 505 are the same as step 403 to step 405, and details are not described herein again.

Step 506. The API invoker sends a token request message to the CCF to request a token. For a specific step, refer to step 406.

A difference from step 406 lies in that the token request message sent by the API invoker to the CCF further includes code_verifier.

Step 507. The CCF requests the AuF to verify an authorization code of a redirect URL and code_verifier, and the AuF verifies the authorization code and code_verifier and returns a verification result. For a specific step of verifying the authorization code, refer to step 407.

A difference from step 407 lies in that the AuF may obtain, based on the authorization code and the association relationship stored in step 502, code_challenge and code_challenge_method that correspond to the authorization code. In addition, the AuF may generate code_challenge based on received code_verifier and stored code_challenge_method.Whether generated code_challenge is consistent with code_challenge stored in step 502 is verified. When both the authorization code and code_verifier are successfully verified, the AuF indicates the CCF to send a token to the API invoker, and step 508 is performed. Otherwise, the verification fails. Step 508 to step 510 are the same as step 408 to step 410, and details are not described herein again.

FIG. 3 to FIG. 5 describe the three OAuth authorization methods (the client credential grant, the authorization code grant, and the PKCE) in the CAPIF to implement authorization for the API invoker. However, the foregoing authorization methods do not consider support and negotiation of the API invoker and the AEF for different authorization methods of a service API.

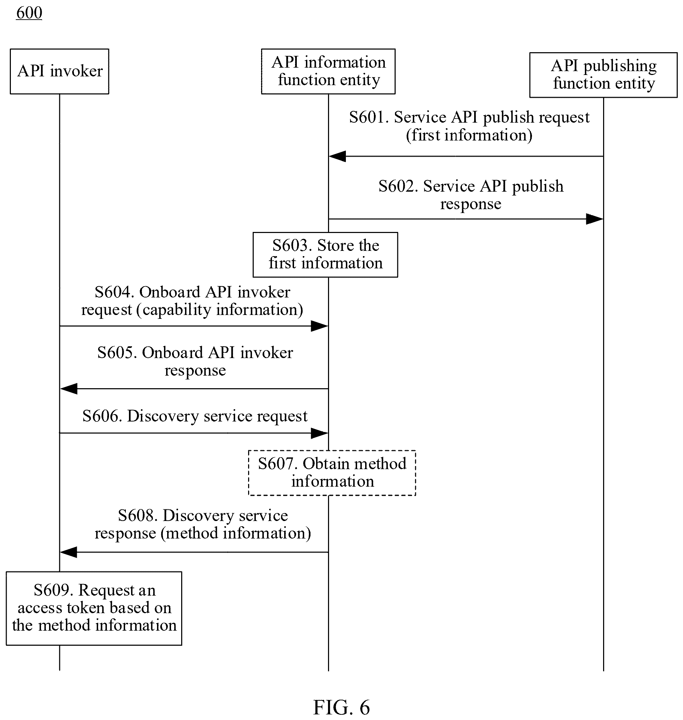

In view of this, a method 600 provides a method for combining a plurality of OAuth authorization methods with an API publishing process of a CAPIF. When an API invoker invokes a service API from an AEF, the API invoker uses different invocation methods based on a capability of the API invoker and a service API authorization method. The following describes the method with reference to FIG. 6.

Step 601. An API publishing function (API publishing function) entity sends a service API publish request message to an API information function entity. Correspondingly, the API information function entity receives the service API publish request message from the API publishing function entity. The service API publish request message is for publish a service API.

It should be noted that the API information function entity in this application is configured to support discovery of service API information, and provide authorization for the API invoker before accessing the service API. For example, the API information function entity may be a CAPIF core function (CAPIF core function, CCF) entity.

The service API publish request message includes an identifier of the service API and first information. The identifier of the service API may be an API ID, an API name, a URL, an IP address, a port number, and the like. The first information includes a grant type, and the grant type is a grant type corresponding to the service API, and indicates an authorization method for the service API. It may be understood as a manner of granting the API invoker access to a user resource, or may be understood as that the API invoker obtains, in the authorization method, a user resource indicated by the service API. The grant type may be an OAuth grant type indicating different grant types with OAuth, and may include one or more of an authorization code grant (authorization code grant), a client credential grant (client credential grant), an implicit grant (implicit grant), a resource owner password credentials grant (resource owner password credentials grant), and an extended grant. For example, the extended grant may include a proof key for code exchange (Proof Key for Code Exchange, PKCE).

It should be noted that in the method 600, the first information may be service API information.

Optionally, the service API information further includes one or more of an identifier of an authorization function (Authorization Function, AuF), a scope, and a PKCE security method. The AuF may be the authorization function entity in FIG. 2, and the identifier of the AuF indicates an address of the AuF. For example, a uniform resource locator (Uniform Resource Locator, URL) of the AuF may be indicated.

The scope indicates a scope in which authorization of the service API is allowed, may be understood as a scope in which the service API is allowed to be used to access a resource, and may be represented by a parameter in an API request message, for example, an API identifier, an API ID, or an API input parameter. For example, if the scope indicates that the service API can obtain user location information, the AuF allows the API invoker to access the user location information by using the service API.

The PKCE security method indicates a method for generating code_challenge, and code_challenge is for verifying an identity of the API invoker. The PKCE security method may include a security method for generating code_challenge, for example, null (represented by plain) or SHA256 (represented by S256). For a specific step of generating code_challenge, refer to the foregoing step 501. Details are not described herein again.

It should be noted that when the grant type is the PKCE, the service API information may include the identifier of the AuF, the scope, and the PKCE security method.

When the grant type is the authorization code grant, the service API information may include the identifier of the AuF and the scope. It may be understood that when the grant type is the authorization code grant, the service API information may not include the PKCE security method. It should be noted that the AuF and the API information function entity may be co-deployed. When the AuF and the API information function entity are co-deployed, the identifier of the AuF may not indicate the address of the AuF, that is, the service API information may not include the identifier of the AuF.

In a possible implementation, the service API publish request message includes identifiers of a plurality of service APIs and service API information corresponding to an identifier of each service API. For example, for different service APIs, there may be the following several types of service API information:
1. API ID 1: The service API information includes a grant type, that is, the authorization code grant, corresponding to the API ID 1. The service API information further includes the identifier of the AuF and the scope.
2. API ID 2: The service API information includes a grant type, that is, the PKCE, corresponding to the API ID 2. The service API information further includes the identifier of the AuF, the scope, and the PKCE security method.
3. API ID 3: The service API information includes a grant type, that is, the client credential grant, corresponding to the API ID 3.
4. API ID 4: The service API information includes grant types, that is, the authorization code grant and the PKCE, corresponding to the API ID 4. The service API information further includes the identifier of the AuF, the scope, and the PKCE security method.
5. API ID 5: The service API information includes grant types, that is, the client credential grant and the PKCE, corresponding to the API ID 5. The service API information further includes the identifier of the AuF, the scope, and the PKCE security method.

Step 602. The API information function entity sends a service API publish response (Service API Publish Response) message to the API publishing function entity.

The service API publish response message includes a result (Result) and a service API published information reference (Service API published information reference). The result indicates that the service API information is successfully published or fails to be published. The service API published information reference is used by the API publishing function entity to search for a published service API.

It may be understood that, if the API information function entity receives the API information and successfully stores the API information or determines that the API information can be stored, the result is for notifying the API publishing function entity that the API information is successfully published; otherwise (for example, configuration permission is limited), the result is for notifying the API publishing function entity that the API information fails to be published. Successful storage may be that the API information function entity has stored the API information. Determining that the API information can be stored is, for example, the API information function entity determines, based on the configuration permission, whether the API information is allowed to be stored, and determines that the API information can be stored if the configuration permission allows.

Step 603. The API information function entity stores the service API information. The service API information is the parameter received by the API information function entity in the service API publish request message in step 601.

For example, corresponding to the first information received in step 601, the API information function entity may store first information corresponding to different API IDs in the following manner:
1. API ID 1: The API information function entity stores the API ID 1, the authorization code grant, the identifier of the AuF, and the scope together through association. The storage through association may be understood as that the API information function entity may determine the first information by using the API ID. For example, the API ID and the first information may be stored as a correspondence; or the API ID and the first information may be separately stored, and an index between the API ID and the first information is established. For example, the authorization code grant, the identifier of the AuF, and the scope corresponding to the API may be subsequently determined by using the API ID 1.
2. API ID 2: The API information function entity stores the API ID 2, the PKCE, the identifier of the AuF, the scope, and the PKCE security method together through association.
3. API ID 3: The API information function entity stores the API ID 3 and the client credential grant through association.
4. API ID 4: The API information function entity stores the API ID 4, the authorization code grant, the PKCE, the identifier of the AuF, the scope, and the PKCE security method together through association.
5. API ID 5: The API information function entity stores the API ID 5, the client credential grant, the PKCE, the identifier of the AuF, the scope, and the PKCE security method together through association.

It should be noted that a sequence of sending the service API publish response message by the API information function entity in step 602 and storing the service API information by the API information function entity in step 603 is not limited. It may be understood that the API information function entity may alternatively first store the service API information, and then send the service API publish response message.

Step 604. The API invoker sends an onboard API invoker request (Onboard API Invoker Request) message to the API information function entity, where the onboard API invoker request message is for registering the API invoker with the API information function entity.

For related descriptions of the onboard API invoker request, refer to the descriptions of step 301. Details are not described herein again.

Optionally, the onboard API invoker request message includes capability information of the API invoker. The capability information indicates an invocation method supported by the API invoker, and the capability information includes an OAuth grant type supported by the API invoker, and optionally, may further include a PKCE security method supported by the API invoker. The OAuth grant type indicates different grant types with OAuth, and may include one or more of an authorization code grant, a client credential grant, an implicit authorization, a resource owner password credentials grant, and an extended grant (for example, the PKCE). The PKCE security method includes a security method for generating code_challenge, for example, may include null (represented by plain), SHA256 (represented by S256), and the like.

The capability information of the API invoker may further include a supported authorization method, for example, a TLS-PSK method, a TLS-PKI method, or a TLS with OAuth token method. For example, the capability information of the API invoker includes the TLS with OAuth token authentication method and the authorization code grant. In another example, the capability information of the API invoker includes the TLS with OAuth token authentication method, the authorization code grant and the PKCE, and the SHA256 method.

For example, the capability information of the API invoker may be represented by using the following table:

**Table 1 Supported security method**

| **Primary key** | **First subkey (OAuth grant type)** | **Second subkey (PKCE security method)** |
|---|---|---|
| PSK | | |
| PKI | | |
| OAUTH | Client credential grant | |
| | Authorization code grant | |
| | PKCE | Null |
| | | SHA256 |

Alternatively, the capability information of the API invoker may be represented by using the following table:

**Table 2 Supported security method**

| **Primary key** |
|---|
| PSK |
| PKI |
| OAUTH |
| OAUTH with PKCE with null |
| OAUTH with PKCE with SHA256 |
| OAUTH with Authorization code grant |

It should be noted that the first two rows in Table 1 are existing designs, and the third row can improve readability of the security method by extending a subkey, to determine a relationship between security sub-methods.

It should be noted that the first three rows in Table 2 are existing designs, and the third row indicates by default that an OAuth client credential grant is supported. The last three rows include both the OAuth grant type and the PKCE security method. In this way, an old method is compatible with and backward compatibility is provided without changing a data type of an original security method. In addition, the security method is extended to support capability negotiation of a finer granularity.

In a possible method, the capability information of the API invoker includes the authorization code grant. In this case, the capability information of the API invoker may be represented by using the fourth row in Table 1, or may be represented by using the sixth row in Table 2.

In another possible method, the capability information of the API invoker includes the client credential grant and the authorization code grant. In this case, the capability information of the API invoker may be represented by using the third row and the fourth row in Table 1, or may be represented by using the third row and the sixth row in Table 2.

In another possible method, the capability information of the API invoker includes the TLS with OAuth token authentication method, the authorization code grant and PKCE (the supported OAuth grant type), and the SHA256 method (the supported PKCE security method). In this case, the capability information of the API invoker may be represented by using the fourth row and the sixth row in Table 1, or may be represented by using the fifth row and the sixth row in Table 2.

For example, when the API invoker prepares to register with the API information function entity, step 604 may be performed.

Step 605. The API information function entity returns an onboard API invoker response (Onboard API Invoker Response) message to the API invoker.

The onboard API invoker response message includes an onboarding status, enrolled information, and service API information. The onboarding status indicates an onboarding result, for example, success or failure. The enrolled information includes an API invoker ID and an authentication method. The API invoker ID is assigned by the API information function entity to the API invoker, the authentication method indicates an authentication method used by the API invoker subsequently, and the authentication method includes one or more of a TLS-PSK method, a TLS-PKI method, and a TLS with OAuth token method. The service API information indicates registered API information, and the service API information includes an identifier of a service API, an AEF location, an IP address, a port number, a protocol, and the like.

Step 606. The API invoker sends a discovery service request message to the API information function entity. The discovery service request message is for requesting to discover a service API. For related descriptions of the discovery service request, refer to the descriptions of step 303. Details are not described herein again.

Optionally, the discovery service request message may further include capability information of the API invoker. For the capability information of the API invoker, refer to the descriptions of step 604.

For example, when the API invoker prepares to discover the service API, step 606 may be performed.

Step 607. The API information function entity obtains method information.

The API information function entity obtains the method information based on the grant type. The grant type is a grant type corresponding to the service API, and the method information is for determining a method for invoking the service API.

Optionally, the API information function entity may directly use the grant type corresponding to the service API as the method information.

For example, the API information function entity obtains the stored service API information based on a criterion of the service API, and then uses the grant type in the stored service API information as the method information.

For example, the API information function entity obtains the API ID 1 based on the criterion of the service API, and obtains the service API information corresponding to the API ID 1, including an associated grant type, that is, the authorization code grant. The API information function entity uses the authorization code grant as the method information.

For example, the API information function entity obtains the API ID 4 based on the criterion of the service API, and obtains the service API information corresponding to the API ID 4, including an associated grant type, that is, the authorization code grant and the PKCE. The API information function entity uses the authorization code grant and the PKCE as the method information. Optionally, the API information function entity selects the method information based on the capability information and the grant type. The capability information indicates a grant type supported by the API invoker.

For example, the API information function entity obtains the stored service API information based on the criterion of the service API, and then selects the method information based on the capability information of the API invoker and the grant type in the stored service API information.

For example, the API information function entity obtains the API ID 1 based on the criterion of the service API, and obtains the service API information corresponding to the API ID 1, including an associated grant type, that is, the authorization code grant. The capability information indicates that the API invoker supports the authorization code grant, and the API information function entity selects the authorization code grant as the method information based on a method jointly supported by both parties.

For example, the API information function entity obtains the API ID 4 based on the criterion of the service API, and obtains the service API information corresponding to the API ID 4, including an associated grant type, that is, the authorization code grant and the PKCE. The capability information indicates that the API invoker supports the client credential grant and the authorization code grant, and the API information function entity selects the authorization code grant as the method information based on a method jointly supported by both parties.

For example, the API information function entity obtains the API ID 5 based on the criterion of the service API, and obtains the service API information corresponding to the API ID 5, including an associated grant type, that is, the client credential grant and the PKCE. The capability information indicates that the API invoker supports the client credential grant and the PKCE, and the API information function entity selects the client credential grant and the PKCE as the method information based on a method jointly supported by both parties.

For example, the API information function entity obtains the API ID 4 based on the criterion of the service API, and obtains the service API information corresponding to the API ID 4, including an associated grant type, that is, the authorization code grant and the PKCE. The capability information indicates that the API invoker supports the authorization code grant and the PKCE, and the API information function entity selects a more secure PKCE as the method information based on a method jointly supported by both parties and a priority list.

For example, the API information function entity obtains the API ID 2 based on the criterion of the service API, and obtains the service API information corresponding to the API ID 2, including an associated grant type, that is, the PKCE. The capability information indicates that the API invoker supports the authorization code grant. Because there is no method jointly supported by two parties, the API information function entity fails to select the method information, and returns a failure indication.

Optionally, when the API invoker supports the PKCE, the capability information of the API invoker may further include the PKCE security method supported by the API invoker. After the API information function entity determines, in the foregoing manner, that the method information is the PKCE, the API information function entity determines a PKCE security method based on the PKCE security method supported by the API invoker and the PKCE security method in the stored service API information.

For example, the API information function entity obtains the stored service API information based on the criterion of the service API, and then selects the PKCE security method based on the PKCE security method supported by the API invoker and the PKCE security method in the stored service API information.

For example, the API information function entity obtains the API ID 4 based on the criterion of the service API, and selects the PKCE as the method information based on the foregoing method. The PKCE security method corresponding to the API ID 4 includes null and SHA256. The PKCE security method supported by the API invoker includes SHA256, and the API information function entity selects SHA256 as the determined PKCE security method based on a method jointly supported by both parties.

For example, the API information function entity obtains the API ID 4 based on the criterion of the service API, and selects the PKCE as the method information based on the foregoing method. The PKCE security method corresponding to the API ID 4 includes null and SHA256. The PKCE security method supported by the API invoker includes null and SHA256, and the API information function entity selects more secure SHA256 as the determined PKCE security method based on a method jointly supported by both parties and a priority list.

The capability information of the API invoker may be obtained by the API information function entity from step 604 or step 606.

Step 608. The API information function entity sends a discovery service response message to the API invoker.

The discovery service response message includes method information. It may be understood that the method information is associated with a grant type. The grant type is a grant type corresponding to the service API. The method information is for determining the method for invoking the service API. The method information includes one or more of the client credential grant, the authorization code grant, and the proof key for code exchange PKCE. The method information is determined based on the method in step 607.

Optionally, the discovery service response message further includes one or more of an identifier of the AuF, a scope, and a determined PKCE security method. It should be noted that the identifier of the AuF and the scope are the same as the identifier of the AuF and the scope received in step 601. The determined PKCE security method may be the same as the PKCE security method received in step 601, or may be obtained based on the method in step 607.

Optionally, when the OAuth grant type is the client credential grant, the service API information sent by the API information function entity may not include the OAuth grant type. It may be understood that when the service API information does not include the OAuth grant type, the OAuth grant type is the client credential grant by default.

For example, the API information function entity determines the corresponding method information for different service API identifiers based on an association relationship that is between the API ID and the service API information and that is stored in step 603. Information included in the discovery service response is as follows:
1. API ID 1: The method information includes the authorization code grant, the identifier of the AuF, and the scope.
2. API ID 4: The method information includes the authorization code grant and the PKCE, the identifier of the AuF, the scope, and the PKCE security method that is SHA256.

Step 609. The API invoker requests, from the API information function entity based on the method information, an access token for invoking the service API.

The method information is method information received by the API invoker from the API information function entity. The method information may include a plurality of invocation methods, for example, including one or more of the client credential grant, the authorization code grant, and the proof key for code exchange PKCE. The method information corresponds to the API ID, and may be for determining the method for invoking the service API. The access token is for granting the API invoker access to a specific service API.

When receiving method information sent by the API information function entity, the API invoker may determine the method information as the method for invoking the service API.

Optionally, when the discovery service response message in step 608 does not include the method information, the API invoker determines that the method for invoking the service API is the client credential grant.

For example, if the API invoker receives the API ID 1 and the method information is the authorization code grant, the API invoker determines that an invocation method of the API ID 1 is the authorization code grant.

When receiving a plurality of pieces of method information sent by the API information function entity, the API invoker may select one invocation method from the method information according to a local policy, that is, use one of the method information as the method for invoking the service API. The local policy may indicate priorities of different invocation methods. For example, a form of the local policy may be a priority list of different invocation methods, or an invocation method that is preferentially selected when a specific condition is met. For example, a PKCE is preferentially selected for a specific API. This is not limited in this embodiment. For example, the priority list may be the PKCE, the authorization code grant, and the client credential grant. This indicates that when three invocation methods, the PKCE, the authorization code grant, and the client credential grant coexist, the PKCE has a priority over the authorization code grant, and the authorization code grant has a priority over the client credential grant.

For example, if the API invoker receives the API ID 4 and the method information is the authorization code grant and the PKCE, the API invoker determines, based on the priority list, that an invocation method of the API ID 4 is the PKCE method.

When the invocation method is the client credential grant method, the API invoker requests, from the API information functional entity, the access token for invoking the service API. Subsequently the API invoker invokes the service API from the AEF entity by using the access token.

The invocation step includes: The API invoker sends an obtain authorization request (Obtain Authorization Request) message to the API information function entity (same as step 305). A subsequent procedure is the same as step 306 to step 309 in the method 300.

When the invocation method is the authorization code grant method, the API invoker obtains a first authorization code, and requests, from the API information function entity by using the first authorization code, the access token for invoking the service API. Subsequently, the API invoker invokes the service API from the AEF entity by using the access token.

The invocation step includes: The API invoker sends an authorization code request message to an RO client (same as step 401). A subsequent procedure is the same as step 402 to step 410 in the method 400. For example, the API invoker obtains the API ID 1 from the API information function entity in step 608, and the grant type corresponding to the API ID 1 determined by the API invoker is the authorization code grant method.

Optionally, the API invoker receives the identifier of the authorization function AuF from the API information function entity. The identifier of the AuF indicates the address of the AuF. When the invocation method is the authorization code grant method, the first authorization code is requested from the AuF based on the identifier of the AuF. Optionally, the API invoker receives the scope from the API information function entity. The API invoker determines whether the scope includes a scope used when the API invoker requests the access token for invoking the service API. The scope indicates a scope in which authorization is allowed for the service API. It should be noted that the identifier of the AuF and the scope are obtained based on step 608.

For example, if the API invoker obtains a scope of a current request by using a user request, for example, requesting location information, and the API invoker further obtains, based on step 608, that an allowed scope is requesting profile picture information, the API invoker determines that the current request exceeds the allowed scope, thereby rejecting API invocation.

For example, if the API invoker obtains a scope of a current request by using a user request, for example, requesting location information, and the API invoker further obtains, based on step 608, that an allowed scope is requesting location information and profile picture information, the API invoker determines that the current request belongs to the allowed scope, and continues to execute the invocation method.

When the invocation method is the PKCE method, the API invoker obtains a second authorization code and code_verifier, and requests, from the API information function entity based on the second authorization code and code_verifier, the access token for invoking the service API. Subsequently, the API invoker invokes the service API from the AEF entity by using the access token.

The invocation step includes: The API invoker sends an authorization code request message to an RO client (same as step 501). A subsequent procedure is the same as step 502 to step 510 in the method 500. Optionally, the AuF ID and the scope are obtained based on step 608. Optionally, the API invoker further determines whether the scope of the current request belongs to the scope obtained from the API information function entity. code_verifier is generated by the API invoker and may be a random number. The API invoker may generate code_challenge based on code_verifier and the determined PKCE security method.

For example, code_verifier may be a random number, and the PKCE security method is null. The API invoker generates code_challenge based on code_verifier and the null method. In this case, code_challenge is the same as code_verifier.

For example, code_verifier may be a random number, and the PKCE security method is SHA256. The API invoker generates code_challenge based on code_verifier and the SHA256 method. In this case, code_challenge is a hash value of code_verifier.

Optionally, the API invoker receives the identifier of the authorization function AuF from the API information function entity. The identifier of the AuF indicates the address of the AuF. When the invocation method is the PKCE method, the API invoker requests the second authorization code from the AuF based on the identifier of the AuF. Optionally, the API invoker receives the scope from the API information function entity. The API invoker determines whether the scope includes the scope used when the API invoker requests the access token for invoking the service API. The scope indicates a scope in which authorization is allowed for the service API. Optionally, the API invoker receives the PKCE security method from the API information function entity. When the invocation method is the PKCE method, the API invoker obtains the second authorization code and code_verifier. The API invoker generates code_challenge based on code_verifier and the PKCE security method. code_challenge is for verifying the identity of the API invoker. It should be noted that the identifier of the AuF, the scope, and the PKCE security method are obtained based on step 608.

According to the procedure of the method 600, publishing and use of authorization related information at an API granularity are implemented in the CAPIF architecture. In this way, the API publishing function entity may publish a service API supported by the API publishing function entity and corresponding first information to the API information function entity, and the API invoker may obtain the first information of the service API from the API information function entity. In this way, the API invoker can perform automatic adaptation and processing by using different OAuth authorization methods, and service API invocation in different authorization methods is implemented in the existing CAPIF architecture. For example, for a service API that can access user privacy, the first information corresponding to the service API is published as an authorization code grant or a PKCE, so that user's participation in authorization is involved when the API invoker invokes the service API, thereby improving security performance.

It should be noted that, in this embodiment, the first information is published and stored at an API granularity, so that the API invoker can obtain, by using an API identifier as an index, first information of an API that can be provided by the AEF, and therefore, can invoke a corresponding API by using an appropriate invocation method.

A method 700 provides a method for combining a plurality of OAuth authorization methods with an API publishing process of a CAPIF. A difference from the method 600 is that the first information in the method 700 is an AEF granularity, the AEF is an entrance for a service provider to open a service externally, and different AEFs may provide different APIs or a same API.

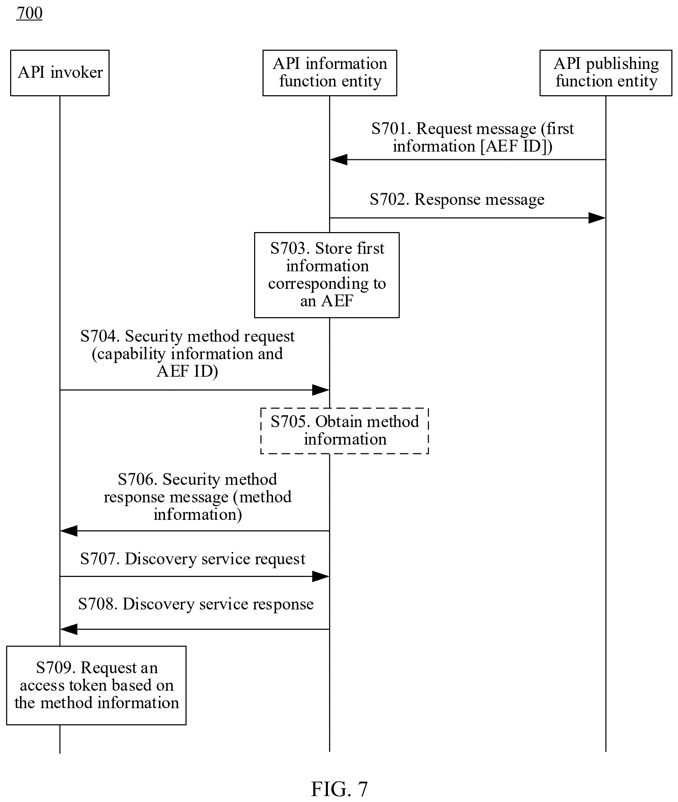

However, because the AEF has a capability limitation, only a limited authorization method may be implemented. The following describes the method with reference to FIG. 7.

Step 701. An API publishing function (API publishing function) entity sends a request message to an API information function entity. Correspondingly, the API information function entity receives the request message from the API publishing function entity.

The request message may be for publishing a service API, or may be for updating information about an AEF.

It should be noted that the API information function entity in this application is configured to support discovery of service API information, and provide authorization for an API invoker before accessing the service API. For example, the API information function entity may be a CAPIF core function (CAPIF core function, CCF) entity.

The request message includes an identifier of the AEF and first information. Optionally, an identifier of the service API may further be included. The identifier of the AEF may be an AEF ID, an AEF location, a URL of the AEF, an IP address of the AEF, or the like. The first information includes a grant type corresponding to the AEF. The grant type indicates an authorization method for the service API, and may be understood as an authorization method for a service API supported by the AEF, or may be understood as that the AEF uses the authorization method to provide, for the API invoker, a user resource indicated by the service API. The grant type may be an OAuth grant type. The OAuth grant type indicates different grant types with OAuth, and may include one or more of an authorization code grant (authorization code grant), a client credential grant (client credential grant), an implicit grant (implicit grant), a resource owner password credentials grant (resource owner password credentials grant), and an extended grant. For example, the extended grant may include a proof key for code exchange (Proof Key for Code Exchange, PKCE).

It should be noted that in the method 700, the first information may be AEF information.

Optionally, the AEF information further includes one or more of an identifier of an AuF, a scope, and a PKCE security method. The identifier of the AuF indicates the address of the AuF. For example, a uniform resource locator (Uniform Resource Locator, URL) of the AuF may be indicated. The scope indicates a scope in which authorization is allowed, may be understood as a scope in which the service API provided by the AEF is allowed to be used to access a resource, and may be represented by a parameter in an API request message, for example, an API identifier, an API ID, or an API input parameter. For example, if the scope indicates that the service API provided by the AEF can obtain user location information, the AuF allows the API invoker to access the user location information by using the service API.

The PKCE security method may include a security method for generating code_challenge, and code_challenge is for verifying an identity of the API invoker. The PKCE security method may include a security method for generating code_challenge, for example, null (represented by plain) or SHA256 (represented by S256). For a specific step of generating code_challenge, refer to the foregoing step 501. Details are not described herein again.

It should be noted that when the grant type is the PKCE, the AEF information may include one or more of the identifier of the AuF, the scope, and the PKCE security method.

When the grant type is the authorization code grant, the AEF information may include the identifier of the AuF and the scope. In other words, when the grant type is the authorization code grant, the AEF information may not include the PKCE security method. It should be noted that the AuF and the API information function entity may be co-deployed. When the AuF and the API information function entity are co-deployed, the AEF information may not include the identifier of the AuF. In a possible implementation, the service API publish request message includes identifiers of a plurality of AEFs and AEF information corresponding to an identifier of each AEF. For example, for different AEFs, there may be the following several types of AEF information:
1. AEF ID 1: The AEF information includes a grant type, that is, the authorization code grant, corresponding to the AEF ID 1. The AEF information further includes the identifier of the AuF and the scope.
2. AEF ID 2: The AEF information includes a grant type, that is, the PKCE, corresponding to the AEF ID 2. The AEF information further includes the identifier of the AuF, the scope, and the PKCE security method.
3. AEF ID 3: The AEF information includes a grant type, that is, the client credential grant, corresponding to the AEF ID 3.
4. AEF ID 4: The AEF information includes grant types, that is, the authorization code grant and the PKCE, corresponding to the AEF ID 4. The AEF information further includes the identifier of the AuF, the scope, and the PKCE security method.
5. AEF ID 5: The AEF information includes grant types, that is, the client credential grant and the PKCE, corresponding to the AEF ID 5. The AEF information further includes the identifier of the AuF, the scope, and the PKCE security method.

Step 702. The API information function entity sends a response message to the API publishing function entity.

The response message is for responding to the request message in step 701. The response message may be a service API publish response message.

The response message includes a result (Result). The result indicates a request success or failure. It may be understood that, if the API information function entity receives the AEF information and successfully stores the AEF information, the API information function entity notifies, by using the result in the publish response, the API publishing function entity that the AEF information is successfully published, where successful storage may be that the API information function entity has stored the AEF information, or may be that the API information function entity determines that the AEF information can be stored. If the API information function entity fails to receive or store the AEF information (for example, configuration permission is limited), the API information function entity notifies, by using the result in the publish response, the API publishing function entity that the AEF information fails to be published.

Step 703. The API information function entity stores the AEF information. The AEF information is a parameter received by the API information function entity in the service API publish request message in step 701.

For example, corresponding to the first information, that is, the AEF information, received in step 701, the API information function entity may store AEF information corresponding to different AEF identifiers in the following manner:
1. AEF ID 1: The API information function entity stores the AEF ID 1, the authorization code grant, the identifier of the AuF, and the scope together through association. The storage through association may be understood as that the API information function entity may determine the first information by using the AEF ID. For example, the AEF ID and the first information may be stored as a correspondence; or the AEF ID and the first information may be separately stored, and an index between the AEF ID and the first information is established. For example, the authorization code grant, the identifier of the AuF, and the scope corresponding to the AEF may be subsequently determined by using the AEF ID 1.
2. AEF ID 2: The API information function entity stores the AEF ID 2, the PKCE, the identifier of the AuF, the scope, and the PKCE security method together through association.
3. AEF ID 3: The API information function entity stores the AEF ID 3 and the client credential grant through association.
4. AEF ID 4: The API information function entity stores the AEF ID 4, the authorization code grant, the PKCE, the identifier of the AuF, the scope, and the PKCE security method together through association.
5. AEF ID 5: The API information function entity stores the AEF ID 5, the client credential grant, the PKCE, the identifier of the AuF, the scope, and the PKCE security method together through association.

It should be noted that a sequence of sending the service API publish response message by the API information function entity in step 702 and storing the AEF information by the API information function entity in step 703 is not limited. It may be understood that the API information function entity may alternatively first store the AEF information, and then send the service API publish response message.

Step 704. The API invoker sends a security method request (Security Method Request) message to the API information function entity, where the security method request message is for negotiating a security method.

Optionally, the security method request message includes an identifier of the AEF and capability information of the API invoker. The identifier of the AEF indicates an AEF that may interact with the API invoker. The capability information indicates a grant type supported by the API invoker, and may also be understood as a security method (Security Method) supported by the API invoker. The capability information includes an OAuth grant type supported by the API invoker, and optionally, may further include a PKCE security method supported by the API invoker. The OAuth grant type indicates different grant types with OAuth, and may include one or more of an authorization code grant, a client credential grant, an implicit authorization, a resource owner password credentials grant, and an extended grant. For example, the extended grant may include a PKCE. The PKCE security method includes a security method for generating code_challenge, for example, may include null (represented by plain), SHA256 (represented by S256), and the like. The capability information of the API invoker may further include a supported authorization method, for example, one or more of a TLS-PSK method, a TLS-PKI method, or a TLS with OAuth token method.

The capability information of the API invoker may be represented by using Table 1 or Table 2 in step 604. Details are not described herein again.

For example, after the API invoker and the API information function entity complete authentication, step 704 may be performed.

Step 705. Optionally, the API information function entity obtains method information.

The API information function entity obtains the method information based on the grant type. The grant type is a grant type corresponding to the AEF. The method information is method information corresponding to the AEF.

Optionally, the API information function entity may directly use the grant type corresponding to the AEF as the method information.

For example, the API information function entity obtains the stored AEF information based on the identifier of the AEF, and then uses the grant type in the stored AEF information as the method information.

For example, the API information function entity obtains, based on the AEF ID 1 as the identifier of the AEF, the AEF information corresponding to the AEF ID 1, where the AEF information includes an associated grant type, that is, the authorization code grant. The API information function entity uses the authorization code grant as the method information.

For example, the API information function entity obtains, based on the AEF ID 4 as the identifier of the AEF, the AEF information corresponding to the AEF ID 4, where the AEF information includes an associated grant type, that is, the authorization code grant and the PKCE. The API information function entity uses the authorization code grant and the PKCE as the method information.

Optionally, the API information function entity selects the method information based on the capability information and the grant type. The capability information indicates a grant type supported by the API invoker.

For example, the API information function entity obtains the stored AEF information based on the identifier of the AEF, and then selects the method information based on the capability information of the API invoker and the grant type in the stored AEF information.

For example, the API information function entity obtains, based on the AEF ID 1 as the identifier of the AEF, the AEF information corresponding to the AEF ID 1, where the AEF information includes an associated grant type, that is, the authorization code grant. The capability information indicates that the API invoker supports the authorization code grant, and the API information function entity selects the authorization code grant as the method information based on a method jointly supported by both parties.

For example, the API information function entity obtains, based on the AEF ID 4 as the identifier of the AEF, the AEF information corresponding to the AEF ID 4, where the AEF information includes an associated grant type, that is, the authorization code grant and the PKCE. The capability information indicates that the API invoker supports the client credential grant and the authorization code grant, and the API information function entity selects the authorization code grant as the method information based on a method jointly supported by both parties.

For example, the API information function entity obtains, based on the AEF ID 5 as the identifier of the AEF, the AEF information corresponding to the AEF ID 5, where the AEF information includes an associated grant type, that is, the client credential grant and the PKCE. The capability information indicates that the API invoker supports the client credential grant and the PKCE, and the API information function entity selects the client credential grant and the PKCE as the method information based on a method jointly supported by both parties.

For example, the API information function entity obtains, based on the AEF ID 4 as the identifier of the AEF, the AEF information corresponding to the AEF ID 4, where the AEF information includes an associated grant type, that is, the authorization code grant and the PKCE. The capability information indicates that the API invoker supports the authorization code grant and the PKCE, and the API information function entity selects a more secure PKCE with a higher priority as the method information based on a method jointly supported by both parties and a priority list. For example, the API information function entity obtains, based on the AEF ID 2 as the identifier of the AEF, the AEF information corresponding to the AEF ID 2, where the AEF information includes an associated grant type, that is, the PKCE. The capability information indicates that the API invoker supports the authorization code grant. Because there is no method jointly supported by two parties, the API information function entity fails to select the method information, and returns a failure indication.

Optionally, when the API invoker supports the PKCE, the capability information of the API invoker may further include the PKCE security method supported by the API invoker. After the API information function entity determines, in the foregoing manner, that the method information is the PKCE, the API information function entity determines a PKCE security method based on the PKCE security method supported by the API invoker and the PKCE security method in the stored AEF information.

For example, the API information function entity obtains the stored AEF information based on the identifier of the AEF, and then selects the PKCE security method based on the PKCE security method supported by the API invoker and the PKCE security method in the stored AEF information.

For example, the API information function entity obtains the AEF ID 4 based on the identifier of the AEF, and selects the PKCE as the method information based on the foregoing method. The PKCE security method corresponding to the AEF ID 4 includes null and SHA256. The PKCE security method supported by the API invoker includes SHA256, and the API information function entity selects SHA256 as the determined PKCE security method based on a method jointly supported by both parties.

For example, the API information function entity obtains the AEF ID 4 based on the identifier of the AEF, and selects the PKCE as the method information based on the foregoing method. The PKCE security method corresponding to the AEF ID 4 includes null and SHA256. The PKCE security method supported by the API invoker includes null and SHA256, and the API information function entity selects more secure SHA256 with a higher priority as the determined PKCE security method based on a method jointly supported by both parties and a priority list.

The capability information of the API invoker may be obtained by the API information function entity from step 704.

Step 706. The API information function entity sends a security method response (Security Method Response) message to the API invoker.

Optionally, the security method response message includes method information. It may be understood that the method information is associated with the grant type. The grant type is a grant type corresponding to the AEF. The method information includes one or more of the client credential grant, the authorization code grant, and the proof key for code exchange PKCE. The method information is determined based on the method in step 705. Optionally, a security method is further included. For example, the security method may include a TLS-PSK method, a TLS-PKI method, and a TLS with OAuth token method.

Optionally, the security method response message further includes one or more of an identifier of the AuF, a scope, and a determined PKCE security method. It should be noted that the identifier of the AuF and the scope are the same as the identifier of the AuF and the scope received in step 701. The determined PKCE security method may be the same as the PKCE security method received in step 701, or may be obtained based on the method in step 705.

Step 707. The API invoker sends a discovery service request message to the API information function entity. The discovery service request message is for requesting to discover the service API.

For related descriptions of the discovery service request, refer to the descriptions of step 303. Details are not described herein again.

Optionally, the discovery service request message may further include capability information of the API invoker. For the capability information of the API invoker, refer to the descriptions of step 704.

For example, when the API invoker prepares to discover the service API, step 707 may be performed.

Step 708. The API information function entity sends a discovery service API response message to the API invoker.

For the discovery service API response message, refer to step 304. Details are not described herein again.

Optionally, one or more of the method information, the identifier of the AuF, the scope, and the determined PKCE security method in step 706 may be sent to the API invoker in the discovery service response message in step 708.

In a possible implementation, the API information function entity sends the identifier of the AEF, the method information, the identifier of the AuF, the scope, and the determined PKCE security method to the API invoker in the discovery service API response message.

In another possible implementation, the API information function entity sends the identifier of the AEF, the method information, the identifier of the AuF, and the determined PKCE security method to the API invoker in step 706, and then sends the service API information to the API invoker in step 708. The service API information includes the identifier of the service API and the scope.

In another possible implementation, the API information function entity sends the identifier of the AEF, the method information, and the determined PKCE security method to the API invoker in step 706, and then sends the service API information to the API invoker in step 708. The service API information includes the identifier of the service API, an identifier of the AuF, and the scope. Step 709. The API invoker requests, from the API information function entity based on the method information, an access token for invoking the service API.

The method information is the method information received by the API invoker from the API information function entity. The method information may include a plurality of invocation methods, for example, one or more of the client credential grant, the authorization code grant, and the proof key for code exchange PKCE. The method information corresponds to the identifier of the AEF, and the service API information also includes the identifier of the AEF. Therefore, a method for invoking the service API may be determined. The access token is for granting the API invoker access to a specific service API.

When receiving method information sent by the API information function entity, the API invoker may determine the method information as the method for invoking the service API.

Specifically, when the API invoker determines to invoke a service API, information about the service API includes an identifier of a corresponding AEF, and AEF information corresponding to the AEF includes corresponding method information, the API invoker determines the method information as the method for invoking the service API. Optionally, when the discovery service response message in step 608 does not include the method information, the API invoker determines that the method for invoking the service API is the client credential grant.

For example, if the API invoker invokes an API 2, and an AEF ID corresponding to an API ID 2 in the service API information is the AEF ID 2, and method information of the AEF ID 2 in the AEF information is a PKCE method, the API invoker determines that an invocation method of the API 2 is the PKCE method.

When receiving a plurality of pieces of method information sent by the API information function entity, the API invoker may select one invocation method from the method information according to a local policy, that is, use one of the method information as the method for invoking the service API. The local policy may indicate priorities of different invocation methods. For example, a form of the local policy may be a priority list of different invocation methods, or an invocation method that is preferentially selected when a specific condition is met. For example, a PKCE is preferentially selected. This is not limited in this embodiment. For example, the priority list may be the PKCE, the authorization code grant, and the client credential grant in a priority sequence. This indicates that when three invocation methods, the PKCE, the authorization code grant, and the client credential grant coexist, the PKCE has a priority over the authorization code grant, and the authorization code grant has a priority over the client credential grant.

For example, the API invoker invokes an API 4, and an AEF ID corresponding to an API ID 4 in information about a service API ID is the AEF ID 4, the AEF ID 4 and method information in the AEF information is the authorization code grant and the PKCE, and a priority list preconfigured by the API invoker is the PKCE, the authorization code grant, and the client credential grant. In this case, the API invoker determines, based on the priority list, that an invocation method of the API 4 is the PKCE method.

Optionally, the API invoker determines whether the determined invocation method is applicable to the service API.

Specifically, the API invoker determines, according to current invocation instructions, whether the determined invocation method is applicable to the service API, and determines whether to perform a procedure of requesting, from the API information function entity, the access token for invoking the service API.

For example, a user triggers the API invoker to perform API invocation by using the PKCE, that is, the current invocation instructions are to perform API invocation by using the PKCE, and the invocation method determined by the API invoker is also the PKCE. In this case, the API invoker determines that the determined invocation method is applicable to the service API, and performs a procedure of requesting, from the API information function entity, the access token for invoking the service API.

For example, a user triggers the API invoker to perform API invocation by using the authorization code credential, that is, the current invocation instructions are to perform API invocation by using the authorization code credential, and the invocation method determined by the API invoker is the PKCE method. In this case, the API invoker determines that the determined invocation method is not applicable to the service API, and the API invoker may re-determine a new invocation method, or may stop performing a procedure of requesting, from the API information function entity, the access token for invoking the service API.

For the procedure in which the API invoker requests, from the API information function entity based on the method information, the access token for invoking the service API, refer to step 609. Details are not described herein again.

According to the procedure of the method 700, publishing and use of the first information at an AEF granularity are implemented in the CAPIF. In this way, the API publishing function entity may publish an API supported by the API publishing function entity and an authorization method corresponding to the AEF to the API information function entity, and the API invoker obtains the method information corresponding to the AEF from the API information function entity. In this way, the API invoker can perform automatic adaptation and processing by using different OAuth authorization methods, and service API invocation in different authorization methods is implemented in the existing CAPIF architecture. For example, for a service API that can access user privacy, the service API is provided by the AEF, the first information corresponding to the AEF is published as an authorization code grant or a PKCE, so that user's participation in authorization is involved when the API invoker invokes the service API, thereby improving security performance.

It should be noted that the first information is published and stored at an AEF granularity, so that the API invoker can obtain, by using an AEF identifier as an index, available first information through negotiation with the AEF, and therefore can invoke a corresponding API by using an appropriate authorization method.

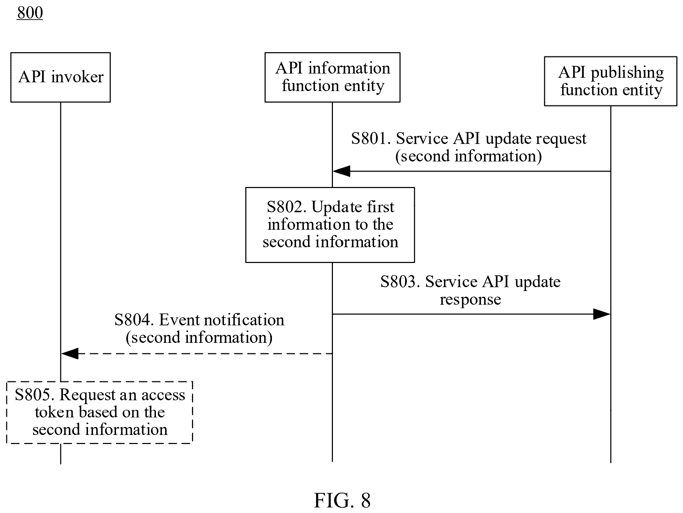

A method 800 provides a method for updating first information at an API/AEF granularity, where the first information at the API granularity corresponds to the method 600, and the first information at the AEF granularity corresponds to the method 700. Based on the method 600 and the method 700, when the first information corresponding to the service API/the AEF is updated, the API information function entity also updates the first information corresponding to the service API/AEF, to ensure that information about the published service API/AEF is latest. The following describes the method with reference to FIG. 8.

Step 801. An API publishing function entity sends a service API update request (Service API update Request) message to an API information function entity. The service API update request message is for updating information about a published service API or AEF.

The service API update request message includes an identifier of the service API and second information. It should be noted that before sending the identifier of the service API and the second information to the API information function entity, the API publishing function entity further sends the identifier of the service API and first information to the API information function entity, where the second information is different from the first information. Optionally, a service API published information reference (Service API published information reference) is further included. The second information is new service API information or new AEF information corresponding to the service API. The published information reference is used by the API publishing function entity to search for the published service API. It may be understood that when the second information includes an identifier of the AEF, the service API update request message is for updating the information about the published AEF.

The second information may be new API information corresponding to the identifier of the service API, or new AEF information corresponding to the identifier of the AEF. It may be understood that when the second information includes the identifier of the AEF, the second information is the new AEF information corresponding to the identifier of the AEF. When the second information does not include the identifier of the AEF, the second information is the new API information corresponding to the identifier of the service API. The second information includes one or more of a client credential grant, an authorization code grant, and a proof key for code exchange PKCE. Optionally, the second information further includes one or more of an identifier of an AuF, a scope, and a PKCE security method.

Optionally, the service API update request message further includes an update cause value, and the cause value indicates to update information corresponding to the service API. For example, the cause value includes a change of a destination address, a change of an authorization-allowed scope, a change of an authorization method, or the like. The destination address may be an IP address of the service API, a location of the AEF, or the like.

In a possible implementation, when the first information on a side of the API publishing function entity is updated, that is, when the information about the service API or the information about the AEF is updated, the API publishing function entity sends the service API update request message. It may be understood that, when receiving information about an API ID 1 twice, where the first information is received for the first time, the second information is received for the second time, and the first information is different from the second information, the API information function entity determines that the first information corresponding to the API ID 1 is updated to the second information. An AEF information determining method is the same as a service API information determining method. Details are not described herein again.

In an implementation, the second information may be different from the first information in a change of a grant type. For example, the first information corresponding to the API ID 1 is an authorization code grant, an identifier of the AuF, and a scope. Subsequently, the API information function entity further receives the second information corresponding to the API ID 1: an authorization code grant and a PKCE, an identifier of the AuF, and a scope. In another implementation, the second information corresponding to the API ID 1 is a PKCE method, an identifier of the AuF, and a scope.

In another implementation, the second information may be different from the first information in a change of information other than the grant type in the API information. For example, the first information corresponding to the API ID 1 is an authorization code grant, an identifier of the AuF, and a scope, where the identifier of the AuF is an AuF ID 1, and the scope is allowing access to a user profile picture and location information. Subsequently, the API information function entity further receives the second information corresponding to the API ID: an authorization code grant, an identifier of the AuF, and a scope, where the identifier of the AuF is an AuF ID 2, and the scope is allowing access to a user profile picture.

Step 802. The API information function entity updates the first information to the second information.

It may be understood that after receiving the service API update request message, the API information function entity replaces the originally stored first information corresponding to the API ID or the AEF ID with the second information corresponding to the identifier of the service API or the identifier of the AEF.

For example, the update corresponds to an update of the service API information of the API ID 1 in step 801. For example, for the API ID 1, the corresponding first information is the authorization code grant, the identifier of the AuF, and the scope. The second information corresponding to the API ID 1 is the authorization code grant and the PKCE, the identifier of the AuF, and the scope. The API information function entity replaces the originally stored first information corresponding to the API ID 1 with the second information. That is, the API information function entity side stores the second information corresponding to the API ID 1 as the authorization code grant and the PKCE, the identifier of the AuF, and the scope.

Step 803. The API information function entity sends a service API update response (Service API update Response) message to the API publishing function entity.

The service API update response message includes a result. The result indicates an update success or failure.

Step 804 (optional). If an API invoker subscribes to an API change event from the API information function entity, the API information function entity sends an event notification (Event Notification) message to the API invoker.

The event notification message includes updated service API information/AEF information, that is, the second information.

Step 805 (optional). The API invoker requests, from the API information function entity based on the second information, an access token for invoking the service API.

If the first information of the service API that is being accessed by the API invoker is updated to the second information, for an invocation step performed by the API invoker based on the second information, refer to the foregoing step 609. Details are not described herein again.

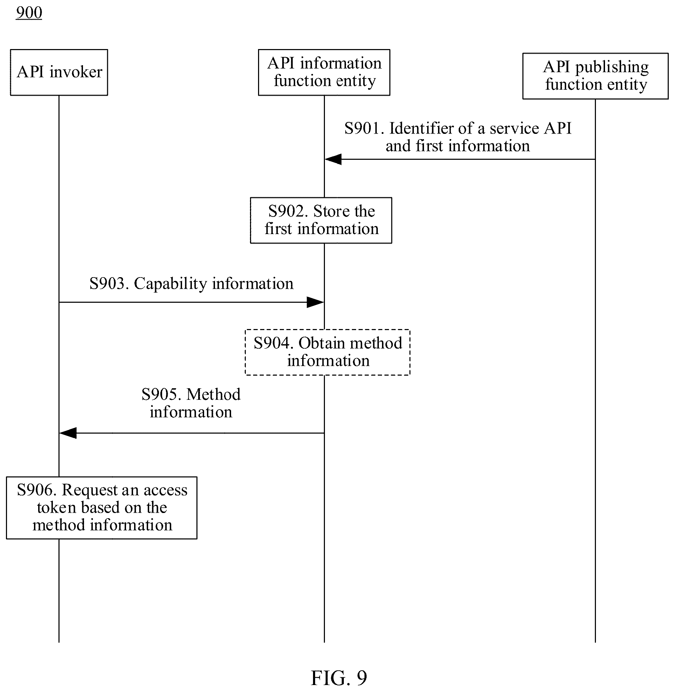

According to the procedure of the method 800, first information update at the API/AEF granularity is implemented in the CAPIF, to ensure that the information about the service API published by the API information function entity is latest, and avoid an invocation failure caused when the API invoker invokes the service API by using old service API information. In this way, the API invoker can perform automatic adaptation and processing by using different OAuth authorization methods. FIG. 9 is an example flowchart of a method 900 according to this application. The method includes the following steps.

S901. An API publishing function entity sends an identifier of a service API and first information to an API information function entity.

In a possible implementation, the API publishing function entity sends a service API publish request message to the API information function entity. The service API publish request message includes the identifier of the service API and the first information (for details, refer to step 601 in the method 600).

In another possible implementation, the API publishing function entity sends a request message to the API information function entity. The request message includes an identifier of an AEF and the first information (for details, refer to step 701 in the method 700).

In still another possible implementation, the API publishing function entity sends a service API update request to the API information function entity. The service API update request message includes the identifier of the service API and second information. Before sending the identifier of the service API and the second information to the API information function entity, the API publishing function entity further sends the identifier of the service API and the first information to the API information function entity (for details, refer to step 901 in the method 900).

In a possible implementation, the API publishing function entity sends the service API update request to the API information function entity. The service API update request message includes an update cause value (for details, refer to step 901 in the method 900).

S902. The API information function entity stores the identifier of the service API and the first information.

In a possible implementation, the API information function entity stores service API information, and the service API information includes the identifier of the service API and the first information (for details, refer to step 603 in the method 600).

In another possible implementation, the API information function entity stores AEF information, where the AEF information includes the identifier of the AEF and the first information (for details, refer to step 703 in the method 700).

In still another possible implementation, the API information function entity stores the identifier of the service API and the first information. Subsequently, the API information function entity receives the identifier of the service API and the second information, and the API information function entity updates the stored first information to the second information (for details, refer to step 802 in the method 800).

S903. An API invoker sends capability information to the API information function entity.

In a possible implementation, the API invoker sends an onboard API invoker request to the API information function entity. The onboard request includes capability information of the API invoker (for details, refer to step 604 in the method 600).

In another possible implementation, the API invoker sends a discovery service request message to the API information function entity. The discovery service request message includes capability information of the API invoker (for details, refer to step 606 in the method 600).

In a possible implementation, the API invoker sends a security method request to the API information function entity. The security method request message includes the identifier of the AEF and the capability information of the API invoker (for details, refer to step 704 in the method 700).

S904. The API information function entity obtains method information based on a grant type.

In a possible implementation, the API information function entity may directly use a grant type corresponding to the service API as the method information. Alternatively, the API information function entity selects the method information based on the capability information and the grant type (for details, refer to step 607 in the method 600).

In another possible implementation, the API information function entity may directly use a grant type corresponding to the AEF as the method information. Alternatively, the API information function entity selects the method information based on the capability information and the grant type (for details, refer to step 705 in the method 700).

S905. The API information function entity sends the method information to the API invoker.

In a possible implementation, the API information function entity sends a discovery service response message to the API invoker. The discovery service response message includes the method information (for details, refer to step 608 in the method 600).

In another possible implementation, the API information function entity sends a security method response message to the API invoker. The security method response message includes the method information (for details, refer to step 706 in the method 700).

In still another possible implementation, the API information function entity sends an event notification to the API invoker. The event notification includes the second information stored by the API information function entity in step 902 (for details, refer to step 804 in the method 800). S906. The API invoker requests, from the API information function entity based on the method information, an access token for invoking the service API.

In a possible implementation, the API information function entity sends a discovery service response message to the API invoker. The discovery service response message includes the method information (for details, refer to step 609 in the method 600, step 709 in the method 700, and step 805 in the method 800).

The solutions provided in embodiments of this application are described above mainly from a perspective of interaction between different network elements. It may be understood that, to implement the foregoing functions, the API invoker, the API information function entity, and the API publishing function entity include corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by computer software depends on a particular application and a design constraint of the technical solutions. A person skilled in the art may use different methods to implement the described functions for each particular application, but it should not be considered that the implementation falls beyond the scope of the technical solutions in embodiments of this application.

In embodiments of this application, the API invoker, the API information function entity, the API publishing function entity, and the like may be divided into function units based on the foregoing method examples. For example, each function unit may be obtained through division based on each corresponding function, or two or more functions may be integrated into one processing unit. The integrated unit may be implemented in a form of hardware, or may be implemented in a form of a software function unit. It should be noted that, in embodiments of this application, division into the units is an example, and is merely logical function division. During actual implementation, another division manner may be used.

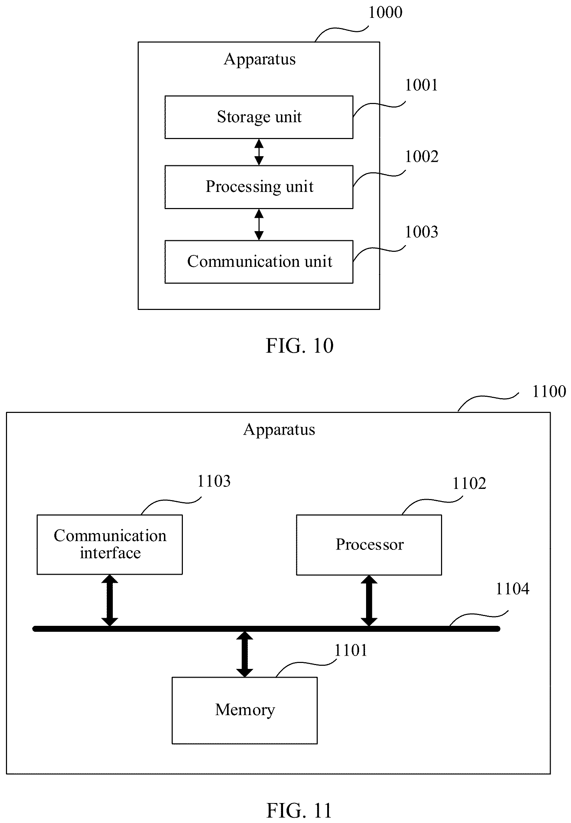

When an integrated unit is used, FIG. 10 is a possible example block diagram of an apparatus according to an embodiment of this application. The apparatus 1000 may exist in a form of software, hardware, or a combination of software and hardware. FIG. 10 is a possible block diagram of an apparatus according to an embodiment of this application. The apparatus 1000 includes a processing unit 1002 and a communication unit 1003. The processing unit 1002 is configured to control and manage an action of the apparatus. The communication unit 1003 is configured to support the apparatus in communicating with another device. The apparatus may further include a storage unit 1001, configured to store program code and data of the apparatus. The apparatus 1000 shown in FIG. 10 may be an API invoker, an API information function entity, or an API publishing function entity in embodiments of this application.

When the apparatus 1000 shown in FIG. 10 is an API invoker, the processing unit 1002 can support the apparatus 1000 in performing actions completed by the API invoker in the foregoing method examples. For example, the processing unit 1002 can support the apparatus 1000 in performing step 609 in FIG. 6, step 709 in FIG. 7, step 805 in FIG. 8, and/or another process of the technology described in this specification. The communication unit 1003 can support communication between the apparatus 1000 and an API information function entity, an API publishing function entity, or the like. For example, the communication unit 1003 supports the apparatus 1000 in performing step 301 to step 309 in FIG. 3, step 406 to step 408 in FIG. 4, step 506 to step 508 in FIG. 5, step 601, step 602, step 604 to step 606, and step 608 in FIG. 6, step 701, step 702, step 704, and step 706 to step 708 in FIG. 7, step 801, step 803, and step 804 in FIG. 8, and/or another related communication process.

When the apparatus 1000 shown in FIG. 10 is an API publishing function entity, the communication unit 1003 can support communication between the apparatus 1000 and an API invoker, an API information function entity, or the like. For example, the communication unit 1003 supports the apparatus 1000 in performing step 301 to step 306 in FIG. 3, step 406 and step 408 in FIG. 4, step 506 and step 508 in FIG. 5, step 604 to step 606 and step 608 in FIG. 6, step 704 and step 706 to step 708 in FIG. 7, step 801 in FIG. 8, and/or another related communication process. When the apparatus 1000 shown in FIG. 10 is an API information function entity, the processing unit 1002 can support the apparatus 1000 in performing actions completed by the API information function entity in the foregoing method examples. For example, the processing unit 1002 supports the apparatus 1000 in performing step 603 and step 607 in FIG. 6, step 703 and step 705 in FIG. 7, step 802 in FIG. 8, and/or another process of the technology described in this specification. The communication unit 1003 can support communication between the apparatus 1000 and an API invoker, an API publishing function entity, or the like. For example, the communication unit 1003 supports the apparatus 1000 in performing step 301 to step 306 in FIG. 3, step 407 in FIG. 4, step 507 in FIG. 5, step 601, step 602, step 604 to step 606, and step 608 in FIG. 6, step 701, step 702, step 704, and step 706 to step 708 in FIG. 7, step 801 and step 804 in FIG. 8, and/or another related communication process.

For example, the processing unit 1002 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. The processor may implement or execute various example logical blocks, units, and circuits described with reference to content disclosed in this application. The processor may alternatively be a combination of computing functions, for example, a combination of one or more microprocessors or a combination of a DSP and a microprocessor. The communication unit 1003 may be a communication interface, and the communication interface is a general term. During specific implementation, the communication interface may include one or more interfaces. The storage unit 1001 may be a memory.

When the processing unit 1002 is a processor, the communication unit 1003 is a communication interface, and the storage unit 1001 is a memory, the apparatus in this embodiment of this application may be an apparatus 1100 shown in FIG. 11.

Refer to FIG. 11. The apparatus 1100 includes a processor 1102 and a communication interface 1103. Further, the apparatus 1100 may further include a memory 1101. Optionally, the apparatus 1100 may further include a bus 1104. The communication interface 1103, the processor 1102, and the memory 1101 may be interconnected through the bus 1104. The bus 1104 may be a peripheral component interconnect (Peripheral Component Interconnect, PCI for short) bus, an extended industry standard architecture (Extended Industry Standard Architecture, EISA for short) bus, or the like. The bus 1104 may be divided into an address bus, a data bus, a control bus, and the like. For ease of representation, only one bold line is used to represent the bus in FIG. 11, but this does not mean that there is only one bus or only one type of bus.

The processor 1102 may perform various functions of the apparatus 1100 by running or executing a program stored in the memory 1101.

For example, the apparatus 1100 shown in FIG. 11 may be an API invoker, an API information function entity, or an API publishing function entity in embodiments of this application.

When the apparatus 1100 is an API invoker, the processor 1102 may perform, by running or executing the program stored in the memory 1101, actions completed by the API invoker in the foregoing method examples. When the apparatus 1100 is an API information function entity, the processor 1102 may perform, by running or executing the program stored in the memory 1101, actions completed by the API information function entity in the foregoing method examples. When the apparatus 1100 is an API publishing function entity, the processor 1102 may perform, by running or executing the program stored in the memory 1101, actions of the API publishing function entity in the foregoing method examples.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an API invoker, an API information function entity, or an API publishing function entity. Certainly, the processor and the storage medium may alternatively exist in the API invoker, the API information function entity, or the API publishing function entity as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a common or a dedicated computer. In the foregoing specific implementations, the objectives, technical solutions, and beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

## Claims

1. A method for invoking a service application programming interface API, wherein the method is applied to a common API framework, an API information function entity provides, for an API invoker, an interface for invoking the service API published by an API publishing function entity, and the method comprises:
receiving an identifier of the service API and first information from the API publishing function entity, wherein the first information comprises a grant type, and the grant type indicates an authorization method for the service API; and
sending method information associated with the grant type to the API invoker, wherein the method information is for determining the method for invoking the service API.

2. The method according to claim 1, wherein before the sending the method information associated with the grant type to the API invoker, the method further comprises:
obtaining the method information based on the grant type.

3. The method according to claim 2, wherein before the sending the method information associated with the grant type to the API invoker, the method further comprises:
receiving capability information from the API invoker, wherein the capability information indicates a grant type supported by the API invoker; and
the obtaining the method information based on the grant type comprises:
selecting the method information based on the capability information and the grant type.

4. The method according to claim 3, wherein the first information further comprises an identifier of an API exposing function AEF, and the receiving capability information from the API invoker comprises:
receiving the capability information and the identifier of the AEF from the API invoker; and
the method further comprises:
determining the grant type based on the identifier of the AEF, wherein the grant type indicates a grant type corresponding to the AEF.

5. The method according to any one of claims 1 to 4, wherein the method further comprises:
storing the identifier of the service API and the first information.

6. The method according to claim 5, wherein after the receiving the identifier of the service API and the first information from the API publishing function entity, the method further comprises:
receiving the identifier of the service API and second information from the API publishing function entity, wherein the second information is different from the first information; and
updating the first information to the second information.

7. The method according to claim 6, wherein the method further comprises:
receiving a cause value from the API publishing function entity, wherein the cause value indicates to update information corresponding to the service API.

8. The method according to claim 6 or 7, wherein the method further comprises:
sending the second information to the API invoker.

9. The method according to any one of claims 1 to 8, wherein the first information further comprises one or more of an identifier of an authorization function AuF, a scope, and a PKCE security method, wherein the identifier of the AuF indicates an address of the AuF, the scope indicates a scope in which the service API is allowed to be authorized, and the PKCE security method indicates a method for generating a challenge value, wherein the challenge value is for verifying an identity of the API invoker.

10. The method according to claim 9, wherein the method further comprises:
sending one or more of the identifier of the AuF, the scope, and a determined PKCE security method to the API invoker, wherein the determined PKCE security method is determined based on the PKCE security method.

11. The method according to any one of claims 1 to 10, wherein the grant type comprises one or more of a client credential grant, an authorization code grant, and a proof key for code exchange PKCE.

12. The method according to any one of claims 1 to 11, wherein the receiving the identifier of the service API and the first information from the API publishing function entity comprises:
receiving a service API publish request message from the API publishing function entity, wherein the service API publish request message is for publishing the service API, and the service API publish request message comprises the identifier of the service API and the first information.

13. A method for invoking a service application programming interface API, wherein the method is applied to a common API framework, an API invoker invokes, via an API information function entity, the service API published by an API publishing function entity, and the method comprises:
receiving method information from the API information function entity, wherein the method information comprises one or more of a client credential grant, an authorization code grant, and a proof key for code exchange PKCE; and
requesting, from the API information function entity based on the method information, an access token for invoking the service API, wherein the method information is for determining the method for invoking the service API.

14. The method according to claim 13, wherein the method information comprises two or three of the client credential grant, the authorization code grant, and the PKCE, and the method further comprises:
determining, based on the method information, the method for invoking the service API.

15. The method according to claim 14, wherein the determining, based on the method information, the method for invoking the service API comprises:
selecting one invocation method from the method information according to a local policy, wherein the local policy indicates priorities of different invocation methods.

16. The method according to claim 14 or 15, wherein the method further comprises:
determining whether the method for invoking the service API is applicable to the service API.

17. The method according to any one of claims 13 to 16, wherein the requesting, from the API information function entity based on the method information, an access token for invoking the service API comprises:
requesting, from the API information function entity when the invocation method is a client credential grant method, the access token for invoking the service API;
obtaining a first authorization code when the invocation method is an authorization code grant method, and requesting, from the API information function entity by using the first authorization code, the access token for invoking the service API; or
obtaining a second authorization code and a verification value when the invocation method is a PKCE method, and requesting, from the API information function entity by using the second authorization code and the verification value, the access token for invoking the service API.

18. The method according to claim 17, wherein the method further comprises:
receiving an identifier of an authorization function AuF from the API information function entity, wherein the identifier of the AuF indicates an address of the AuF; and
requesting the first authorization code from the AuF based on the identifier of the AuF when the invocation method is the authorization code grant method; or
requesting the second authorization code from the AuF based on the identifier of the AuF when the invocation method is the PKCE method.

19. The method according to claim 17 or 18, wherein the method further comprises:
receiving a scope from the API information function entity; and
determining whether the scope comprises a scope used when the API invoker requests the access token for invoking the service API, wherein the scope indicates a scope in which the service API is allowed to be authorized.

20. The method according to any one of claims 17 to 19, wherein the method further comprises:
receiving a PKCE security method from the API information function entity, wherein the obtaining the second authorization code and a verification value when the invocation method is the PKCE method comprises:
generating a challenge value based on the verification value and the PKCE security method, wherein the challenge value is for verifying an identity of the API invoker.

21. The method according to any one of claims 13 to 20, wherein the method further comprises:
receiving second information from the API information function entity, wherein the second information comprises updated method information; and
requesting, from the API information function entity based on the updated method information, the access token for invoking the service API.

22. The method according to any one of claims 13 to 21, wherein before the receiving method information from the API information function entity, the method further comprises:
sending capability information to the API information function entity, wherein the capability information indicates an invocation method supported by the API invoker.

23. A method for invoking a service application programming interface API, wherein the method is applied to a common API framework, an API publishing function entity publishes the service API to an API invoker via an API information function entity, and the method comprises:
sending an identifier of the service API and first information to the API information function entity, wherein the first information comprises a grant type, and the grant type indicates an authorization method for the service API.

24. The method according to claim 23, wherein the first information further comprises an identifier of an API exposing function AEF.

25. The method according to claim 23 or 24, wherein after the sending an identifier of the service API and first information to the API information function entity, the method further comprises:
sending the identifier of the service API and second information to the API information function entity, wherein the second information is different from the first information.

26. The method according to claim 25, wherein the method further comprises:
sending a cause value to the API information function entity, wherein the cause value indicates to update information corresponding to the service API.

27. An application programming interface API information function entity, comprising units configured to perform the steps in the method according to any one of claims 1 to 12.

28. An application programming interface API invoker, comprising units configured to perform the steps in the method according to any one of claims 13 to 22.

29. An application programming interface API publishing function entity, comprising units configured to perform the steps in the method according to any one of claims 23 to 26.

30. A computer-readable storage medium, wherein the computer-readable storage medium stores instructions; and when the instructions are run on a computer, the computer is enabled to perform the method according to any one of claims 1 to 26.
